# EUROPEAN PATENT SPECIFICATION

(11) **EP 4 344 128 B1**
(45) Date of publication and mention of the grant of the patent: **11.02.2026**
(21) Application number: 21944617.6
(22) Date of filing: 11.06.2021
(51) Int. Cl.: H04L 9/16, H04L 9/08

(54) **METHOD FOR UPDATING VEHICLE-TO-EVERYTHING (V2X) COMMUNICATION KEY, AND COMMUNICATION APPARATUS**
VERFAHREN ZUR AKTUALISIERUNG EINES VEHICLE-TO-EVERYTHING (V2X)-KOMMUNIKATIONSSCHLÜSSELS UND KOMMUNIKATIONSVORRICHTUNG
PROCÉDÉ DE MISE À JOUR D'UNE CLÉ DE COMMUNICATION DE VÉHICULE À TOUT (V2X), ET APPAREIL DE COMMUNICATION

(43) Date of publication of application: 27.03.2024
(73) Proprietor: Shenzhen Yinwang Intelligent Technologies Co., Ltd., Shenzhen, Guangdong 518129 (CN)
(72) Inventor: GUO, Zhipeng, Shenzhen, Guangdong 518129 (CN)
(74) Representative: Pfenning, Meinig & Partner mbB
(86) International application number: PCT/CN2021/099674
(87) International publication number: WO 2022/257108

(56) References cited:
- WO-A1-03/094421
- WO-A1-2008/115984
- WO-A1-2014/072933
- CN-A- 101 102 552
- CN-A- 107 276 767
- CN-A- 109 922 475
- CN-A- 111 159 767
- CN-A- 111 200 491
- CN-A- 113 079 013
- JP-B2- 6 603 019
- US-A1- 2018 123 784
- BAYRAK A O ET AL: "S3P: A Secure and Privacy Protecting Protocol for VANET", WIRELESS AND MOBILE COMMUNICATIONS (ICWMC), 2010 6TH INTERNATIONAL CONFERENCE ON, IEEE, PISCATAWAY, NJ, USA, 20 September 2010 (2010-09-20), pages 441 - 447, XP031795636, ISBN: 978-1-4244-8021-0

## Description

### TECHNICAL FIELD

This disclosure generally relates to the field of vehicle-to-everything technologies, and the invention in particular relates to a method for updating a V2X communication key, a communication apparatus, and a computer-readable storage medium.

### BACKGROUND

Vehicle-to-everything (vehicle-to-everything, V2X) refers to a technology in which a vehicle is interconnected with a surrounding object, and includes a plurality of manners such as vehicle-to-infrastructure (vehicle-to-infrastructure, V2I) and vehicle-to-vehicle (vehicle-to-vehicle, V2V). In a V2X communication scenario, a vehicle needs to broadcast location coordinates of the vehicle and a historical track of the vehicle based on a reference point at any time, to help self-driving implement lane-level assisted driving. To prevent a malicious vehicle or a specially forged malicious roadside device from intentionally collecting a broadcast channel of a surrounding vehicle to obtain data such as continuous coordinates, coordinate data in a V2X broadcast message needs to be encrypted for protection.

To improve security of a message encryption key and reduce impact of key leakage, the message encryption key needs to be periodically updated. Interconnection and sharing between devices need to be implemented for the V2X broadcast message. Therefore, interconnection and sharing also need to be implemented for a key required for encrypting coordinate information in the V2X broadcast message. If there is a key mismatch, the encrypted information cannot be normally parsed, and consequently a V2X communication-related service is affected. Therefore, in a key update process, it needs to be ensured that key sharing between different vehicles and other related devices is not affected.

Currently, communication keys of all vehicle-to-everything terminal devices are managed by a cloud V2X service platform, and each terminal device has a respective V2X communication key. In each V2X communication process, the terminal device obtains a communication key of a message sender from the cloud, and then decrypts and parses a message. For example, a specific procedure may be as follows: A terminal device 1 receives a V2X message sent by a terminal device 2, where the V2X message includes an identifier of the terminal device 2 and V2X data encrypted by using a V2X communication key. The terminal device 1 obtains the V2X communication key of the terminal device 2 from the V2X service platform based on the identifier of the terminal device 2. The terminal device 1 decrypts the encrypted V2X data by using the V2X communication key of the terminal device 2, to obtain the V2X data.

In this solution, all the terminal devices temporarily obtain a V2X communication key of a sender from the cloud in a communication process, and key update needs to be performed only on the cloud V2X service platform, which does not affect key sharing between two communication parties. It can be learned that in this V2X communication key update manner, the V2X communication device is required to have a real-time network connection capability when performing V2X encrypted communication. If the vehicle cannot be connected to the V2X service platform (for example, in a no-network environment such as a mountainous area or a bridge), V2X communication cannot be normally performed.

WO 2014/072933 A1 discloses a method and system of key distribution by trusted nodes for a vehicular ad hoc network, the nodes of said network having at least one pair of public-private keys and the corresponding certificates, issued by a CA, said method comprising each vehicle node, on entering said network region, requesting a set of keys from an RSU node that is within range and within that region, said RSU node sending said vehicle node a set of private keys, selected from a pool of private keys, and a list with the key identifiers of the private keys shared by said vehicle node and the other vehicle nodes that have most recently contacted said RSU for a predetermined period of time; such that two nodes are able to establish a secure connection without further interaction by deriving a shared secret which is a cryptographic hash function of the keys shared by said two nodes.

WO 2008/115984 A1 discloses techniques to solve problems with combinatorial anonymous certificate management by addressing critical issues concerning its feasibility, scalability, and performance. Methods and procedures to manage IEEE.anonymous and identifying cryptographic keys and certificates in the Vehicle Infrastructure Integration (VII) system are presented, along with methods for management of identifying and anonymous certificates in a partitioned Certificate Authority architecture designed to enhance vehicle privacy. Novel methods for vehicles to dynamically change an anonymous certificate for use while maintaining vehicle privacy are given. Refinements to basic combinatorial schemes are presented including probabilistic key replacement, rekey counter decrement, dynamic rekey threshold, geographic attack isolation and proofs of geographic position.

The paper by BAYRAK A 0 ET AL: "SBP: A Secure and Privacy Protecting Protocol for VANET", WIRELESS AND MOBILE COMMUNICATIONS (ICWMC), 2010 6TH INTERNATIONAL CONFERENCE ON, IEEE, PISCATAWAY, NJ, USA, 20 September 2010 (2010-09-20), pages 441 -447, XP031795636, ISBN: 978-1-4244-8021-0 addresses the technical problems of the challenge of ensuring secure and privacy-preserving communication in Vehicular Ad Hoc Networks (VANETs). The document proposes a PKI-based protocol to address these issues.

### SUMMARY

The object of the present application is to provide a method for updating a V2X communication key, a communication apparatus, and a computer-readable storage medium, so that a terminal device that does not have a real-time network connection capability can normally perform V2X communication. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, the invention provides a method for updating a V2X communication key. The method includes: A first terminal device receives an N^{th} batch of key information sent by a server, where the N^{th} batch of key information includes x V2X communication keys and time information corresponding to each of the x V2X communication keys, N is an integer greater than or equal to 1, and x is an integer greater than 1; the first terminal device selects a first V2X communication key from the x V2X communication keys based on local system time and the time information corresponding to each key; and the first terminal device encrypts V2X data by using the first V2X communication key, to obtain encrypted V2X data. Based on the method described in the first aspect, the first terminal device may update a batch of key information from the server at a time, and therefore does not need to update the key information from the server in real time. Therefore, based on the method described in the first aspect, a terminal device that does not have a real-time network connection capability can normally perform V2X communication.

In a possible implementation, the N^{th} batch of key information further includes a key version number corresponding to each of the x V2X communication keys, and the first terminal device may further send a V2X message to a second terminal device, where the V2X message includes a key version number corresponding to the first V2X communication key and the encrypted V2X data. Based on this possible implementation, the first terminal device can indicate the key used to encrypt the V2X data to the second terminal device, so that the second terminal device successfully decrypts the encrypted V2X data.

According to the invention, each of the x V2X communication keys includes an active state and an invalid state, time information corresponding to an i^{th} key in the x V2X communication keys indicates TS2ᵢ and TS4ᵢ, TS2ᵢ is an active state start moment of the i^{th} key, and TS4ᵢ is an invalid state start moment of the i^{th} key, where i is greater than 0 and less than or equal to x. Based on this possible implementation, the first terminal device selects a valid V2X communication key from the x V2X communication keys to encrypt the V2X data.

In a possible implementation, a status of each of the x V2X communication keys further includes a to-be-activated state and/or a suspended state, the time information corresponding to the i^{th} key further indicates TS1ᵢ and/or TS3ᵢ, TS1ᵢ is a to-be-activated state start moment of the i^{th} key, TS3ᵢ is a suspended state start moment of the i^{th} key, and in the x V2X communication keys, a suspended state start moment of a previous key is equal to an active state start moment of a current key. The to-be-activated state and/or the suspended state are/is set for the V2X communication key, so that V2X communication can be normally performed when system time of a transmit end and system time of a receive end of the V2X data are not synchronized.

In a possible implementation, a specific implementation in which the first terminal device selects the first V2X communication key from the x V2X communication keys based on the local system time and the time information corresponding to each key is as follows: The first terminal device determines a status of one or more of the x V2X communication keys based on the local system time and the time information corresponding to each key; and the first terminal device selects the first V2X communication key from the one or more keys based on the status of the one or more keys. Based on this possible implementation, the first terminal device can select a valid V2X communication key from the x V2X communication keys to encrypt the V2X data.

Alternatively, the first terminal device may not need to determine or record a status of the V2X communication key, and when determining that a V2X communication key meets a switching condition of a key status, the first terminal device performs corresponding subsequent processing, that is, does not explicitly store the key status.

In a possible implementation, a specific implementation in which the first terminal device determines the status of the one or more of the x V2X communication keys based on the local system time and the time information corresponding to each key is as follows: The first terminal device determines, if it is detected that TS1ᵢ≤T<TS2ᵢ, that the i^{th} key is in the to-be-activated state, where T is the local system time; the first terminal device switches the i^{th} key to the active state if it is detected, when the i^{th} key is in the to-be-activated state, that TS2ᵢ≤T<TS3ᵢ; the first terminal device switches the i^{th} key to the suspended state if it is detected, when the i^{th} key is in the active state, that TS3ᵢ≤T<TS4ᵢ; or the first terminal device switches the i^{th} key to the invalid state if it is detected, when the i^{th} key is in the suspended state, that TS4ᵢ≤T. Based on this possible implementation, the first terminal device can accurately determine the status of the key.

In a possible but not claimed implementation, the first terminal device switches the i^{th} key to the active state if it is detected, when the i^{th} key is in the to-be-activated state, that there is no V2X communication key in the active state in the first terminal device. Based on this possible implementation, when there is no V2X communication key in the active state in the first terminal device, a key in the to-be-activated state can be switched to the active state in a timely manner, to ensure normal V2X communication.

In a possible but not claimed implementation, a specific implementation in which the first terminal device switches the i^{th} key to the suspended state if it is detected, when the i^{th} key is in the active state, that TS3ᵢ≤T<TS4ᵢ is as follows: The first terminal device switches the i^{th} key to the suspended state if it is detected, when the i^{th} key is in the active state, that TS3ᵢ≤T<TS4ᵢ and there is a V2X communication key in the to-be-activated state in the first terminal device. Based on this possible implementation, V2X communication can still be normally performed when the first terminal device fails to update a key batch.

In a possible but not claimed implementation, the first terminal device switches the i^{th} key to the active state if it is detected, when the i^{th} key is in the suspended state, that there is no V2X communication key in the active state in the first terminal device; and a specific implementation in which the first terminal device switches the i^{th} key to the invalid state if it is detected, when the i^{th} key is in the suspended state, that TS4ᵢ≤T is as follows: The first terminal device switches the i^{th} key to the invalid state if it is detected, when the i^{th} key is in the suspended state, that TS4ᵢ≤T and there is a V2X communication key in the active state. Based on this possible implementation, if a V2X communication key in the suspended state is not allowed to be used to encrypt the V2X data, V2X communication can still be normally performed when the V2X communication key in the active state is lost.

In a possible but not claimed implementation, the first terminal device switches the i^{th} key to the active state if there is no V2X communication key in the active state when the i^{th} key is in the invalid state. Based on this possible implementation, if a V2X communication key in the invalid state is not allowed to be used to encrypt the V2X data, V2X communication can still be normally performed when the V2X communication key in the active state is lost.

In a possible implementation, the first V2X communication key is a key in the active state. Based on this possible implementation, the first terminal device can select a valid key to encrypt the V2X data.

In a possible but not claimed implementation, when there is no key in the active state in the one or more keys, the first V2X communication key is a key in the suspended state or the invalid state. Based on this possible implementation, V2X communication can still be normally performed when the V2X communication key in the active state is lost.

In a possible but not claimed implementation, the time information corresponding to the i^{th} key includes TS2ᵢ and TS4ᵢ, and further includes TS1ᵢ and/or TS3ᵢ; the time information corresponding to the i^{th} key includes one or more of TS1ᵢ, TS2ᵢ, and TS4ᵢ, and further includes T1ᵢ and T2ᵢ; the time information corresponding to the i^{th} key includes one or more of TS2ᵢ, TS3ᵢ, and TS4ᵢ, and further includes T2ᵢ and T3ᵢ; the time information corresponding to the i^{th} key includes one or more of TS1ᵢ, TS2ᵢ, TS3ᵢ, and TS4ᵢ, and further includes T1ᵢ, T2ᵢ, and T3ᵢ; the time information corresponding to the i^{th} key includes one or more of TS1ᵢ, TS2ᵢ, and TS4ᵢ, and T1ᵢ and T2ᵢ are preset; the time information corresponding to the i^{th} key includes one or more of TS2ᵢ, TS3ᵢ, and TS4ᵢ, and T2ᵢ and T3ᵢ are preset; or the time information corresponding to the i^{th} key includes one or more of TS1ᵢ, TS2ᵢ, TS3ᵢ, and TS4ᵢ, and T1ᵢ, T2ᵢ, and T3ᵢ are preset; and T1ᵢ is to-be-activated state duration of the i^{th} key in the x V2X communication keys, T2ᵢ is active state duration of the i^{th} key, and T3ᵢ is suspended state duration of the i^{th} key. Based on this possible implementation, TS2ᵢ and TS4ᵢ, and TS1ᵢ and/or TS3ᵢ can be accurately indicated.

In a possible implementation, the V2X message further includes an initialization vector used to encrypt the V2X data. Based on this possible implementation, the second terminal device can successfully decrypt the encrypted V2X data.

In a possible implementation, the V2X message includes a to-be-signed data field, the to-be-signed data field includes a message header information field, the message header information field includes a key version field and an initialization vector field, the key version number corresponding to the first V2X communication key is carried in the key version field, and the initialization vector is carried in the initialization vector field. When the key version field and the initialization vector field are included in the to-be-signed data field, content of the two fields is involved in a process of calculating a message digital signature. This can protect content integrity and source identity authenticity of the two fields.

In a possible implementation, a first update request is sent to the server when a time interval between the local system time and an activation start moment of a first target key in the x V2X communication keys reaches first preset duration, where the first update request is used to request an (N+1)^{th} batch of key information, and the first target key is a key that first enters the active state in the x V2X communication keys; a first update request is sent to the server when a time interval between the local system time and a suspension moment of a last key in the x V2X communication keys is less than second preset duration; a first update request is sent to the server when a quantity of used keys in the x V2X communication keys is greater than a first threshold; or a first update request is sent to the server when a quantity of remaining to-be-used keys in the x V2X communication keys is less than a second threshold. Based on this key update manner, when keys in the N^{th} batch of key information are not used up, a next batch of key information can be updated, that is, the key information can be updated in advance. In this way, even if the first terminal device is temporarily disconnected from a network, there is no case in which no key is available for the terminal, and a case in which the first terminal device cannot be connected to the network for a period of time is allowed.

In a possible but not claimed implementation, the first terminal device may further send a first update request to the server, where the first update request is used to request an (N+1)^{th} batch of key information, and the first update request carries a quantity of V2X communication keys that need to be applied for; and the first terminal device may further receive the (N+1)^{th} batch of key information from the server, where the (N+1)^{th} batch of key information includes p V2X communication keys and time information corresponding to each of the p V2X communication keys, and p is equal to the quantity of V2X communication keys. Optionally, the (N+1)^{th} batch of key information further includes a key version number corresponding to each of the p V2X communication keys. Based on this possible implementation, the first terminal device can more flexibly update the V2X communication key.

According to a second aspect according to the invention, the invention also provides another method for updating a V2X communication key. The method includes: A second terminal device receives an M^{th} batch of key information sent by a server, where the M^{th} batch of key information includes y V2X communication keys, and a key version number and time information of each of the y V2X communication keys, M is an integer greater than or equal to 1, and y is an integer greater than 1; the second terminal device receives a V2X message sent by a first terminal device, where the V2X message includes a key version number of a first V2X communication key and encrypted V2X data encrypted by using the first V2X communication key; the second terminal device obtains the first V2X communication key from the y V2X communication keys based on the key version number of the first V2X communication key; and the second terminal device decrypts the encrypted V2X data by using the first V2X communication key.

In a possible implementation, before the second terminal device decrypts the encrypted V2X data by using the first V2X communication key, the second terminal device may further determine, based on local system time and time information corresponding to the first V2X communication key, that the first V2X communication key is valid. By determining that the key is valid, a device that does not have a valid communication key can be prevented from forging an encrypted message. A device that does not have a communication key cannot use a valid key to encrypt a message, and may use an expired or destroyed key to encrypt a message. After receiving the forged message, the second terminal device may discover this case through validity check. In addition, when it is determined, before decryption, that the key is valid, an invalid decryption process can be reduced, to help improve performance.

According to the invention, a status of each of the y V2X communication keys includes an active state and an invalid state, time information corresponding to a j^{th} key in the y V2X communication keys indicates TS2ⱼ and TS4ⱼ, TS2ⱼ is an active state start moment of the j^{th} key, and TS4ⱼ is an invalid state start moment of the j^{th} key, where j is greater than 0 and less than or equal to y.

In a possible but not claimed implementation, the status of each of the y V2X communication keys further includes a to-be-activated state and/or a suspended state, the time information corresponding to the j^{th} key further indicates TS1ⱼ and/or TS3ⱼ, TS1ⱼ is a to-be-activated state start moment of the j^{th} key, TS3ⱼ is a suspended state start moment of the j^{th} key, and in the y V2X communication keys, a suspended state start moment of a previous key is equal to an active state start moment of a current key.

In a possible but not claimed implementation, a specific implementation in which the second terminal device determines, based on the local system time and the time information corresponding to the first V2X communication key, that the first V2X communication key is valid is as follows: The second terminal device determines, based on the local system time and the time information corresponding to the first V2X communication key, that a status of the first V2X communication key is the to-be-activated state, the active state, or the suspended state. Based on this possible implementation, V2X communication can still be normally performed when system time of a transmit end and system time of a receive end of the V2X data are not synchronized.

In a possible but not claimed implementation, a specific implementation in which the second terminal device determines the status of the first V2X communication key based on the local system time and the time information corresponding to the first V2X communication key is as follows: The second terminal device determines, if TS1≤T<TS2, that the first V2X communication key is in the to-be-activated state, where T is the local system time; the second terminal device switches the first V2X communication key to the active state if TS2≤T<TS3 when the first V2X communication key is in the to-be-activated state; or the second terminal device switches the first V2X communication key to the suspended state if TS3≤T<TS4 when the first V2X communication key is in the active state, where TS1 is a to-be-activated state start moment of the first V2X communication key, TS2 is an active state start moment of the first V2X communication key, TS3 is a suspended state start moment of the first V2X communication key, and TS4 is an invalid state start moment of the first V2X communication key.

In a possible but not claimed implementation, the second terminal device switches the first V2X communication key to the active state if there is no V2X communication key in the active state in the second terminal device when the first V2X communication key is in the to-be-activated state.

In a possible but not claimed implementation, a specific implementation in which the second terminal device switches the first V2X communication key to the suspended state if TS3≤T<TS4 when the first V2X communication key is in the active state is as follows: The second terminal device switches the first V2X communication key to the suspended state if TS3≤T<TS4 and there is a V2X communication key in the to-be-activated state in the second terminal device when the first V2X communication key is in the active state.

In a possible but not claimed implementation, the second terminal device switches the first V2X communication key to the active state if there is no V2X communication key in the active state when the first V2X communication key is in the suspended state.

In a possible but not claimed implementation, the second terminal device switches the first V2X communication key to the active state if there is no V2X communication key in the active state when the first V2X communication key is in the invalid state.

In a possible but not claimed implementation, the time information corresponding to the j^{th} key includes TS2ⱼ and TS4ⱼ, and further includes TS1ⱼ and/or TS3ⱼ; the time information corresponding to the j^{th} key includes one or more of TS1ⱼ, TS2ⱼ, and TS4ⱼ, and further includes T1ⱼ and T2ⱼ; the time information corresponding to the j^{th} key includes one or more of TS2ⱼ, TS3ⱼ, and TS4ⱼ, and further includes T2ⱼ and T3ⱼ; the time information corresponding to the j^{th} key includes one or more of TS1ⱼ, TS2ⱼ, TS3ⱼ, and TS4ⱼ, and further includes T1ⱼ, T2ⱼ, and T3ⱼ; the time information corresponding to the j^{th} key includes one or more of TS1ⱼ, TS2ⱼ, and TS4ⱼ, and T1ⱼ and T2ⱼ are preset; the time information corresponding to the j^{th} key includes one or more of TS2ⱼ, TS3ⱼ, and TS4ⱼ, and T2ⱼ and T3ⱼ are preset; or the time information corresponding to the j^{th} key includes one or more of TS1ⱼ, TS2ⱼ, TS3ⱼ, and TS4ⱼ, and T1ⱼ, T2ⱼ, and T3ⱼ are preset; and T1ⱼ is to-be-activated state duration of the j^{th} key in the y V2X communication keys, T2ⱼ is active state duration of the j^{th} key, and T3ⱼ is suspended state duration of the j^{th} key.

In a possible but not claimed implementation, the V2X message further includes an initialization vector used to encrypt the V2X data.

In a possible but not claimed implementation, the V2X message includes a to-be-signed data field, the to-be-signed data field includes a message header information field, the message header information field includes a key version field and an initialization vector field, the key version number corresponding to the first V2X communication key is carried in the key version field, and the initialization vector is carried in the initialization vector field.

In a possible but not claimed implementation, a second update request is sent to the server when a time interval between the local system time and an activation start moment of a second target key in the y V2X communication keys reaches first preset duration, where the second update request is used to request to obtain an (X+1)^{th} batch of key information, and the second target key is a key that first enters the active state in the y V2X communication keys; a second update request is sent to the server when a time interval between the local system time and a suspension moment of a last key version in the y V2X communication keys is less than second preset duration; a second update request is sent to the server when a quantity of used keys in the y V2X communication keys is greater than a first threshold; or a second update request is sent to the server when a quantity of remaining to-be-used keys in the y V2X communication keys is less than a second threshold.

In a possible but not claimed implementation, the second terminal device sends a second update request to the server, where the second update request is used to request an (M+1)^{th} batch of key information, and the second update request carries a quantity of V2X communication keys that need to be applied for; and the second terminal device receives the (M+1)^{th} batch of key information from the server, where the (M+1)^{th} batch of key information includes q V2X communication keys, and a key version and time information corresponding to each of the q V2X communication keys, and q is equal to the quantity of V2X communication keys.

According to a third aspect, where the third aspect and any of its implementations and options below are not claimed, this application provides a method for updating a V2X communication key. The method includes: A server generates an N^{th} batch of key information for a first terminal device, where the N^{th} batch of key information includes x V2X communication keys and time information corresponding to each of the x V2X communication keys, N is an integer greater than or equal to 1, and x is an integer greater than 1; the server sends the N^{th} batch of key information to the first terminal device; the server generates an M^{th} batch of key information for a second terminal device, where the M^{th} batch of key information includes y V2X communication keys, and a key version number and time information of each of the y V2X communication keys, M is an integer greater than or equal to 1, and y is an integer greater than 1; and the server sends the M^{th} batch of key information to the second terminal device.

In a possible implementation, the server may further receive a first update request sent by the first terminal device, where the first update request is used to request an (N+1)^{th} batch of key information, and the first update request carries a quantity of V2X communication keys that need to be applied for; the server generates the (N+1)^{th} batch of key information for the first terminal device based on the quantity of V2X communication keys carried in the first update request, where the (N+1)^{th} batch of key information includes p V2X communication keys and time information corresponding to each of the p V2X communication keys, and p is equal to the quantity of V2X communication keys; and the server sends the (N+1)^{th} batch of key information to the first terminal device. Optionally, the (N+1)^{th} batch of key information further includes a key version number corresponding to each of the p V2X communication keys.

In a possible implementation, the server may further receive a second update request sent by the second terminal device, where the second update request is used to request an (M+1)^{th} batch of key information, and the second update request carries a quantity of V2X communication keys that need to be applied for; the server generates the (M+1)^{th} batch of key information for the second terminal device based on the quantity of V2X communication keys carried in the second update request, where the (M+1)^{th} batch of key information includes q V2X communication keys, and a key version and time information corresponding to each of the q V2X communication keys, and q is equal to the quantity of V2X communication keys; and the server sends the (M+1)^{th} batch of key information to the second terminal device.

For beneficial effects of the second aspect and the third aspect, refer to the beneficial effects corresponding to the first aspect. Details are not described herein.

According to a fourth aspect according to the invention, the invention also provides a communication apparatus. The apparatus may be, although not claimed, a terminal device, an apparatus in a terminal device, or an apparatus that can be used together with a terminal device. The communication apparatus may alternatively be, although not claimed, a chip system. The communication apparatus may perform the method in the first aspect or the second aspect. A function of the communication apparatus may be implemented, although not claimed, by hardware, or may be implemented, although not claimed, by hardware by executing corresponding software. The hardware or the software includes one or more units or modules corresponding to the function. The unit or module may be software and/or hardware. For operations performed by the communication apparatus and beneficial effects thereof, refer to the method in the first aspect or the second aspect, and the beneficial effects thereof. Repeated content is not described again.

According to a fifth aspect, where the fifth aspect and any of its implementations and options below are not claimed, this application provides a communication apparatus. The communication apparatus may be a server, an apparatus in a server, or an apparatus that can be used together with a server. The communication apparatus may alternatively be a chip system. The communication apparatus may perform the method in the third aspect. A function of the communication apparatus may be implemented by hardware, or may be implemented by hardware by executing corresponding software. The hardware or the software includes one or more units or modules corresponding to the function. The unit or module may be software and/or hardware. For operations performed by the communication apparatus and beneficial effects thereof, refer to the method in the third aspect, and the beneficial effects thereof. Repeated content is not described again.

According to a sixth aspect, where the sixth aspect and any of its implementations and options below are not claimed, this application provides a communication apparatus. The communication apparatus includes a processor. When the processor invokes a computer program in a memory, the method in any one of the first aspect to the third aspect is performed.

According to a seventh aspect, where the seventh aspect and any of its implementations and options below are not claimed, this application provides a communication apparatus. The communication apparatus includes a processor and a memory. The processor is coupled to the memory. The processor is configured to implement the method in any one of the first aspect to the third aspect.

According to an eighth aspect, where the eighth aspect and any of its implementations and options below are not claimed, this application provides a communication apparatus. The communication apparatus includes a processor, a memory, and a transceiver. The processor is coupled to the memory. The transceiver is configured to send and receive data. The processor is configured to implement the method in any one of the first aspect to the third aspect.

According to a ninth aspect, where the ninth aspect and any of its implementations and options below are not claimed, this application provides a communication apparatus. The communication apparatus includes a processor and an interface. The interface is configured to receive or output a signal. The processor is configured to implement the method in any one of the first aspect to the third aspect by using a logic circuit or executing code instructions.

According to a tenth aspect according to the invention, the invention also provides a computer-readable storage medium. The storage medium stores a computer program or instructions. When the computer program or the instructions are or is executed by a communication apparatus, the method in any one of the first aspect to the third aspect is implemented.

According to an eleventh aspect, where the eleventh aspect and any of its implementations and options below are not claimed, this application provides a computer program product including instructions. When a computer reads and executes the computer program product, the computer is enabled to perform the method in any one of the first aspect to the third aspect.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a schematic diagram of an existing communication system;
FIG. 2 is a schematic flowchart of a method for updating a V2X communication key according to an embodiment of this application;
FIG. 3 is a schematic diagram of a key status according to an embodiment of this application;
FIG. 4 is a schematic diagram of switching a key status according to an embodiment of this application;
FIG. 5 is another schematic diagram of a key status according to an embodiment of this application;
FIG. 6 is another schematic diagram of switching a key status according to an embodiment of this application;
FIG. 7 is still another schematic diagram of a key status according to an embodiment of this application;
FIG. 8 is still another schematic diagram of a key status according to an embodiment of this application;
FIG. 9 is still another schematic diagram of a key status according to an embodiment of this application;
FIG. 10 is still another schematic diagram of switching a key status according to an embodiment of this application;
FIG. 11 is still another schematic diagram of a key status according to an embodiment of this application;
FIG. 12 is still another schematic diagram of switching a key status according to an embodiment of this application;
FIG. 13 is still another schematic diagram of switching a key status according to an embodiment of this application;
FIG. 14 is still another schematic diagram of switching a key status according to an embodiment of this application;
FIG. 15 is still another schematic diagram of switching a key status according to an embodiment of this application;
FIG. 16 is a schematic diagram of a status of a key batch according to an embodiment of this application;
FIG. 17 is a schematic diagram of switching a status of a key batch according to an embodiment of this application;
FIG. 18A and FIG. 18B are a schematic flowchart of another method for updating a V2X communication key according to an embodiment of this application;
FIG. 19 is a schematic diagram of a V2X message format according to an embodiment of this application;
FIG. 20A and FIG. 20B are a schematic flowchart of still another method for updating a V2X communication key according to an embodiment of this application;
FIG. 21 is a schematic diagram of a structure of a communication apparatus according to an embodiment of this application;
FIG. 22 is a schematic diagram of a structure of another communication apparatus according to an embodiment of this application; and
FIG. 23 is a schematic diagram of a structure of a chip according to an embodiment of this application.

### DESCRIPTION OF EMBODIMENTS

To make the objectives, technical solutions, and advantages of this application clearer, the following further describes this application in detail with reference to the accompanying drawings.

In the specification, the claims, and the accompanying drawings of this application, the terms "first", "second", and the like are intended to distinguish between different objects, and are not intended to describe a specific sequence. In addition, the terms "include", "have", and any other variants thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" in this specification means that a specific feature, structure, or characteristic described with reference to the embodiment may be included in at least one embodiment of this application. The phrase appearing at various locations in the specification does not necessarily refer to a same embodiment, and is not an independent or optional embodiment exclusive from another embodiment. It is explicitly and implicitly understood by a person skilled in the art that embodiments described in this specification may be combined with another embodiment.

In this application, "at least one (item)" means one or more, "a plurality of" means two or more, "at least two (items)" means two, three, or more, and "and/or" is used to describe a correspondence relationship between corresponding objects, and indicates that there may be three relationships. For example, "A and/or B" may indicate the following three cases: Only A exists, only B exists, and both A and B exist, where A and B may be singular or plural. The character "/" usually represents an "or" relationship between corresponding objects. "At least one of the following items (pieces)" or a similar expression thereof refers to any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

To enable a terminal device that does not have a real-time network connection capability to normally perform V2X communication, embodiments of this application provide a method for updating a V2X communication key and a communication apparatus. To better understand the solutions provided in this application, the following first describes a communication system to which this application can be applied.

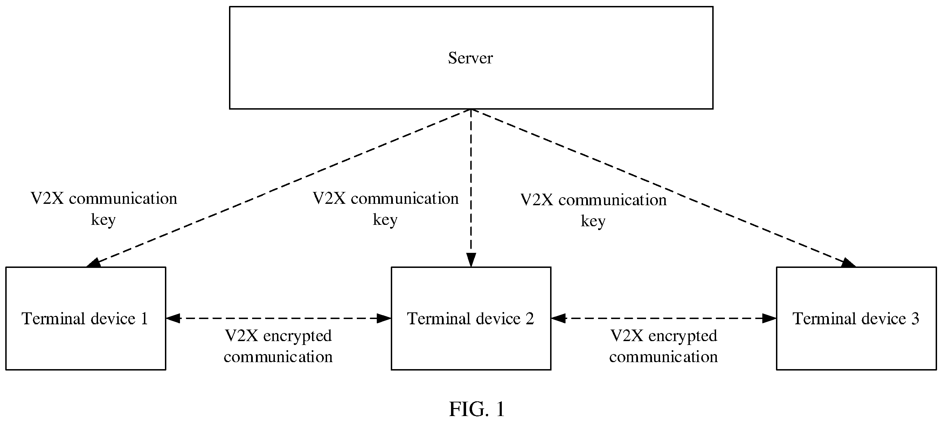

FIG. 1 is a schematic diagram of a communication system according to an embodiment of this application. As shown in FIG. 1, the communication system includes a server and a plurality of terminal devices. In FIG. 1, three terminal devices are used as an example. Certainly, the communication system may alternatively include two terminal devices or at least three terminal devices. This is not limited in this embodiment of this application. A quantity of servers and a deployment manner are not limited in this embodiment of this application either.

In this embodiment of this application, vehicle-to-everything (vehicle-to-everything, V2X) communication is performed between terminal devices. V2X refers to a technology in which a vehicle is interconnected with a surrounding object, and includes a plurality of manners such as vehicle-to-infrastructure (vehicle-to-infrastructure, V2I), vehicle-to-vehicle (vehicle-to-vehicle, V2V), vehicle-to-pedestrian (vehicle-to-pedestrian, V2P), and V2N (Vehicle-To-Network, vehicle-to-network). Therefore, the terminal device may be a vehicle, an infrastructure (for example, a roadside unit), a smartphone, or the like.

For example, in FIG. 1, a terminal device 1 may be a vehicle, a terminal device 2 may be a vehicle, a terminal device 3 may be a vehicle, V2V communication is performed between the terminal device 1 and the terminal device 2. and V2V communication is performed between the terminal device 1 and the terminal device 3. For another example, a terminal device 1 may be a roadside unit, a terminal device 2 may be a vehicle, a terminal device 3 may be a roadside unit, V2I communication is performed between the terminal device 1 and the terminal device 2, and V2I communication is performed between the terminal device 2 and the terminal device 3. For still another example, a terminal device 1 may be a vehicle, a terminal device 2 may be a vehicle, a terminal device 3 may be a roadside unit, V2V communication is performed between the terminal device 1 and the terminal device 2, and V2I communication is performed between the terminal device 2 and the terminal device 3.

The roadside unit (Roadside Unit, RSU) may be an apparatus that is installed on a roadside and that communicates with a vehicle-mounted communication unit by using a shortrange communication technology, to implement services such as vehicle identification and electronic score deduction. The roadside unit includes a high-gain directional beam-control read/write antenna and a radio frequency controller. The high-gain directional beam-control read/write antenna is a microwave transceiver module that is responsible for sending/receiving, modulating/demodulating, encoding/decoding, or encrypting/decrypting a signal and data. The radio frequency controller is a module that controls data transmission and reception and receives information from an upper computer or sends information to an upper computer.

In this embodiment of this application, the server may be a cloud server, or the server may be a local server. For example, the local server may be a server of a vendor of the terminal device.

The server is responsible for uniformly managing V2X communication keys used by terminal devices to perform V2X communication. Each terminal device obtains a batch of V2X communication keys from the server, locally stores the batch of V2X communication keys, and selects a V2X communication key in a subsequent V2X communication process, to encrypt V2X data. A receiver uses the same key to decrypt the encrypted V2X data.

Optionally, the V2X data may be coordinates, a historical track, or the like of the terminal device. Alternatively, the V2X data may be other data. This is not limited in this embodiment of this application.

In this embodiment of this application, a process in which the server delivers and updates the V2X communication key is performed through a network, and the terminal device needs to have a network connection capability. V2X encrypted communication between terminal devices is performed through wireless communication (for example, 4G/5G communication), and a communication distance is short.

The following further describes in detail the method for updating a V2X communication key and the communication apparatus provided in embodiments of this application.

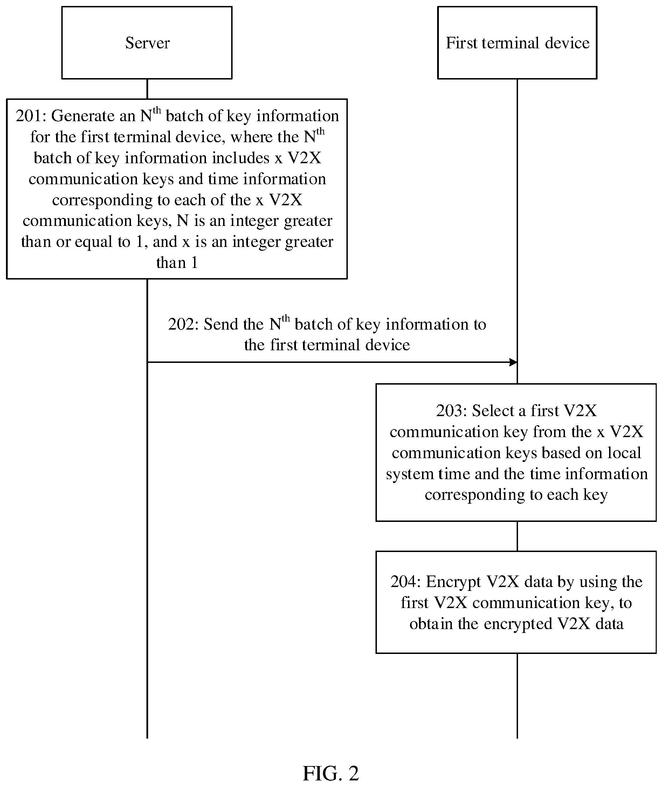

FIG. 2 is a schematic flowchart of a method for updating a V2X communication key according to an embodiment of this application. As shown in FIG. 2, the method for updating a V2X communication key includes the following steps 201 to 204. The method shown in FIG. 2 may be performed by a server and a first terminal device. Alternatively, the method shown in FIG. 2 may be performed by a chip in a server and a chip in a first terminal device. In FIG. 2, an example in which the method is performed by the server and the first terminal device is used for description.

201: The server generates an N^{th} batch of key information for the first terminal device, where the N^{th} batch of key information includes x V2X communication keys and time information corresponding to each of the x V2X communication keys, N is an integer greater than or equal to 1, and x is an integer greater than 1.

202: The server sends the N^{th} batch of key information to the first terminal device. Correspondingly, the first terminal device receives the N^{th} batch of key information sent by the server.

In this embodiment of this application, the first terminal device may be a terminal device that performs V2X communication, for example, a vehicle, an infrastructure, or a smartphone.

In a possible implementation, the N^{th} batch of key information may be a first batch of key information. If the N^{th} batch of key information is the first batch of key information, the first terminal device may first send a registration request to the server. After receiving the registration request, the server generates the first batch of key information, and sends the first batch of key information to the first terminal device.

In another possible implementation, the N^{th} batch of key information is not a first batch of key information. For example, the N^{th} batch of key information may be a second batch of key information or a third batch of key information. If the N^{th} batch of key information is not the first batch of key information, the first terminal device may first send a key update request to the server. After receiving the key update request, the server generates the N^{th} batch of key information, and sends the N^{th} batch of key information to the first terminal device.

In this embodiment of this application, the N^{th} batch of key information includes the x V2X communication keys and the time information corresponding to each of the x V2X communication keys, where x is an integer greater than 1. That is, each time the first terminal device updates a batch of key information from the server, the batch of key information includes a plurality of V2X communication keys and time information corresponding to each of the plurality of V2X communication keys. For example, the N^{th} batch of key information includes five V2X communication keys and time information corresponding to each of the five V2X communication keys.

The server may send a same V2X communication key to a plurality of terminal devices. For a same V2X communication key, time information corresponding to the key sent by the server to all terminal devices is the same. For example, time information corresponding to a V2X communication key 1 sent by the server to a terminal device 1 is the same as time information corresponding to the V2X communication key 1 sent by the server to another terminal device.

203: The first terminal device selects a first V2X communication key from the x V2X communication keys based on local system time and the time information corresponding to each key.

In this embodiment of this application, after receiving the N^{th} batch of key information from the server, the first terminal device stores the N^{th} batch of key information. When the first terminal device needs to perform V2X communication, the terminal device may select a V2X communication key from the x V2X communication keys based on the local system time and the time information corresponding to each key, and then the terminal device may encrypt V2X data by using the selected V2X communication key, to obtain encrypted V2X data.

In a possible implementation, a status of each of the x V2X communication keys includes an active state and an invalid state, time information corresponding to an i^{th} key in the x V2X communication keys indicates TS2ᵢ and TS4ᵢ, TS2ᵢ is an active state start moment of the i^{th} key, and TS4ᵢ is an invalid state start moment of the i^{th} key, where i is greater than 0 and less than or equal to x. Based on this possible implementation, the first terminal device selects a valid V2X communication key from the x V2X communication keys to encrypt the V2X data.

A V2X communication key in the active state is allowed to be used to encrypt the V2X data, and is allowed to be used to decrypt the encrypted V2X data. A V2X communication key in the invalid state is not allowed to be used to encrypt the V2X data, and is not allowed to be used to decrypt the encrypted V2X data. Alternatively, when there is no key in the active state in the first terminal device, a V2X communication key in the invalid state is allowed to be used to encrypt the V2X data.

There may be the following two cases for the status of each of the x V2X communication keys. The two cases are separately described below.
1. Each of the x V2X communication keys includes the active state and the invalid state, and does not include a to-be-activated state or a suspended state.

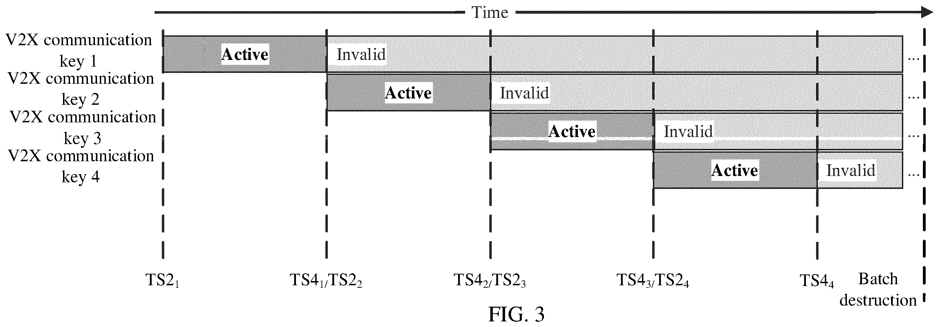

Herein, TS2ᵢ and TS4ᵢ are absolute time, TS2ᵢ+T2ᵢ=TS4ᵢ, and T2ᵢ is active state duration of the i^{th} key. In the x V2X communication keys, an invalid state start moment of a previous key is equal to an active state start moment of a current key, that is, TS4ᵢ₋₁=TS2ᵢ. For example, as shown in FIG. 3, the N^{th} batch of key information includes a V2X communication key 1 to a V2X communication key 4.

Optionally, the time information corresponding to the i^{th} key may indicate TS2ᵢ and TS4ᵢ in the following three manners:
(1) The time information corresponding to the i^{th} key includes TS2ᵢ and TS4ᵢ.

In the manner (1), the first terminal device directly downloads TS2ᵢ and TS4ᵢ from the server, that is, the time information corresponding to the i^{th} key explicitly indicates TS2ᵢ and TS4ᵢ.

(2) The time information corresponding to the i^{th} key includes one of TS2ᵢ and TS4ᵢ, and further includes T2ᵢ.

For example, the time information corresponding to the i^{th} key includes TS2ᵢ and T2ᵢ. Because TS2ᵢ+T2ᵢ=TS4ᵢ, the first terminal device determines TS4ᵢ based on TS2ᵢ and T2ᵢ.

For another example, the time information corresponding to the i^{th} key includes TS4ᵢ and T2ᵢ. Because TS2ᵢ+T2ᵢ=TS4ᵢ, the first terminal device determines TS2ᵢ based on TS4ᵢ and T2ᵢ.

(3) The time information corresponding to the i^{th} key includes one of TS2ᵢ and TS4ᵢ, and T2ᵢ is preset.

In the manner (3), T2ᵢ is fixedly configured, and does not need to be indicated by the server. In the manner (2) and the manner (3), it may be understood as that the time information corresponding to the i^{th} key implicitly indicates TS2ᵢ and TS4ᵢ.

It can be learned that TS2ᵢ and TS4ᵢ can be accurately indicated in the foregoing three manners.

Optionally, the time information corresponding to the i^{th} key may further indicate an invalid state end moment TS5ᵢ. For example, the time information corresponding to the i^{th} key includes the invalid state end moment TS5ᵢ or T4ᵢ, or T4ᵢ is preset. T4ᵢ is invalid state duration of the i^{th} key. TS4ᵢ+T4ᵢ=TS5ᵢ. In this way, the first terminal device can determine the invalid state end moment TS5ᵢ of the i^{th} key, to destroy the i^{th} key after the invalid state end moment of the i^{th} key arrives. All keys in a batch may be destroyed at a same moment. Therefore, all the keys may correspond to different invalid state duration. Alternatively, all keys in a batch may be destroyed at different moments. This is not limited in this embodiment of this application.

Optionally, a specific implementation in which the first terminal device selects the first V2X communication key from the x V2X communication keys based on the local system time and the time information corresponding to each key is as follows: The first terminal device determines a status of one or more of the x V2X communication keys based on the local system time and the time information corresponding to each key; and the first terminal device selects the first V2X communication key from the one or more keys based on the status of the one or more keys. The local system time is system time of the first terminal device. Based on this possible implementation, a valid V2X communication key can be selected from the x V2X communication keys to encrypt the V2X data.

Optionally, after determining the status of the V2X communication key, the first terminal device may set a variable in a program, and specify the status of the V2X communication key by using a value of the variable. Alternatively, a value may be written into a file, the status of the V2X communication key may be specified by using the value, and a program determines the status of the V2X communication key based on the read value.

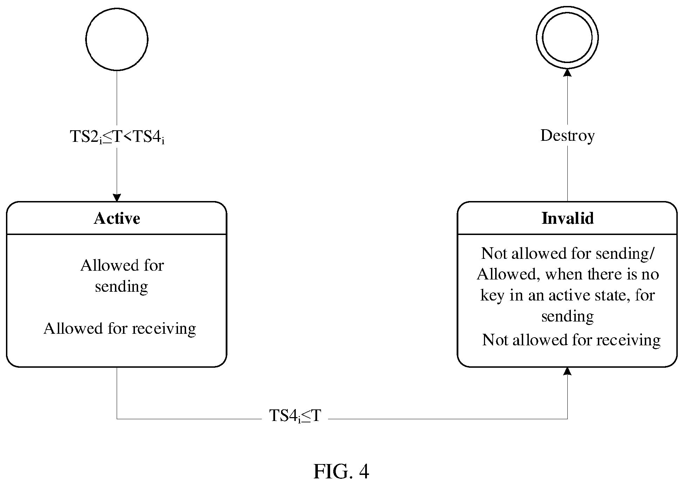

Optionally, a specific implementation in which the first terminal device determines the status of the one or more of the x V2X communication keys based on the local system time and the time information corresponding to each key is as follows: The first terminal device determines, if it is detected that TS2ᵢ≤T<TS4ᵢ, that the i^{th} key is in the active state, where T is the local system time; or the first terminal device switches the i^{th} key to the invalid state if it is detected, when the i^{th} key is in the active state, that TS4ᵢ≤T. For example, a schematic diagram of switching a key status may be shown in FIG. 4.

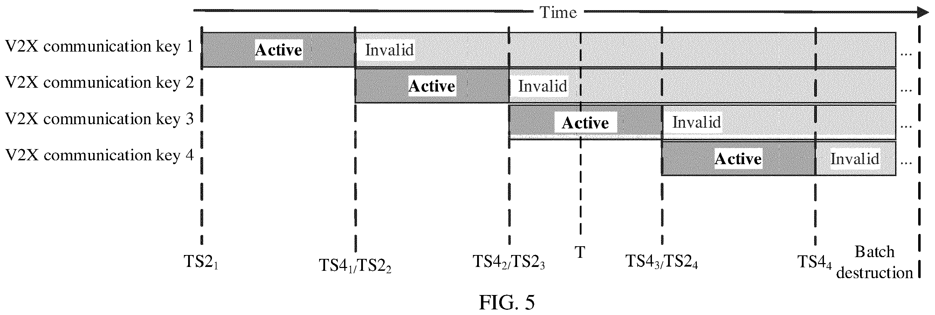

For example, the N^{th} batch of key information includes the V2X communication key 1 to the V2X communication key 4 and time information corresponding to the V2X communication key 1 to time information corresponding to the V2X communication key 4. As shown in FIG. 5, for the V2X communication key 1, because TS4₁≤T, the first terminal device determines that the V2X communication key 1 is in the invalid state; for a V2X communication key 2, because TS4₂≤T, the first terminal device determines that the V2X communication key 2 is in the invalid state; for a V2X communication key 3, because TS2₃≤T<TS4₃, the first terminal device determines that the V2X communication key 3 is in the active state; and for the V2X communication key 4, because T≤TS2₄, the first terminal device determines that the V2X communication key 4 is neither in the active state nor in the invalid state.

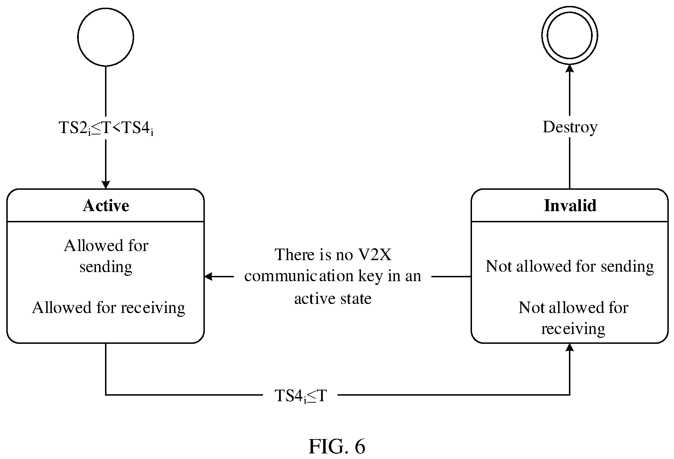

Optionally, when the i^{th} key is in the invalid state, if there is no V2X communication key in the active state in the first terminal device, the first terminal device switches the i^{th} key to the active state. For example, a schematic diagram of switching a key status may be shown in FIG. 6. The V2X communication key in the active state is allowed to be used to encrypt the V2X data. Therefore, based on this optional manner, if the V2X communication key in the invalid state is not allowed to be used to encrypt the V2X data, V2X communication can still be normally performed when the V2X communication key in the active state is lost.

For example, if the V2X communication key 3 shown in FIG. 5 is lost, the first terminal device may switch the V2X communication key 1 or the V2X communication key 2 to the active state. In other words, the first terminal device may select a V2X communication key in the invalid state, and switch the V2X communication key to the active state. The first terminal device may select any one of V2X communication keys in the invalid state, and switch the V2X communication key to the active state. Optionally, if there are a plurality of V2X communication keys in the invalid state, the first terminal device may switch a latest V2X communication key in the invalid state to the active state, that is, the i^{th} key is the latest V2X communication key in the invalid state. For example, a latest V2X communication key in the V2X communication keys in the invalid state in FIG. 5 is the V2X communication key 2.

Alternatively, if the V2X communication key in the invalid state is not allowed to be used to encrypt the V2X data, when the i^{th} key is in the invalid state, if there is no V2X communication key in the active state in the first terminal device, the first terminal device may not switch the i^{th} key to the active state. However, in this manner, the first terminal device cannot perform V2X communication in a timely manner.

Optionally, the first V2X communication key may be a V2X communication key in the active state. The V2X communication key in the active state is allowed to be used to encrypt the V2X data. Therefore, the first terminal device may select the V2X communication key in the active state to encrypt the V2X data. For example, the first V2X communication key may be the V2X communication key 3 in FIG. 5.

Optionally, when there is no key in the active state in the one or more keys, the first V2X communication key is a key in the invalid state. In this optional manner, when there is no key in the active state in the first terminal device, the V2X communication key in the invalid state is allowed to be used to encrypt the V2X data. When the i^{th} key is in the invalid state, if there is no V2X communication key in the active state in the first terminal device, the first terminal device does not need to switch the i^{th} key to the active state, and the first terminal device directly selects a key in the invalid state to encrypt the V2X data. Based on this optional manner, V2X communication can still be normally performed when the V2X communication key in the active state is lost.

For example, if the V2X communication key 3 shown in FIG. 5 is lost, the first terminal device may select the V2X communication key 1 or the V2X communication key 2 to encrypt the V2X data. Optionally, the first terminal device may select a latest V2X communication key in the V2X communication keys in the invalid state, and switch the latest V2X communication key to the active state.

2. Each of the x V2X communication keys further includes a to-be-activated state and/or a suspended state in addition to the active state and the invalid state.

In addition to indicating TS2ᵢ and TS4ᵢ, the time information corresponding to the i^{th} key in the x V2X communication keys further indicates TS1ᵢ and/or TS3ᵢ, TS1ᵢ is a to-be-activated state start moment of the i^{th} key, and TS3ᵢ is a suspended state start moment of the i^{th} key. In the x V2X communication keys, a suspended state start moment of a previous key is equal to an active state start moment of a current key.

Herein, TS1ᵢ, TS2ᵢ, TS3ᵢ, and TS4ᵢ are absolute time, T1ᵢ is to-be-activated state duration of the i^{th} key in the x V2X communication keys, T2ᵢ is active state duration of the i^{th} key, T3ᵢ is suspended state duration of the i^{th} key, and T4ᵢ is invalid state duration of the i^{th} key.

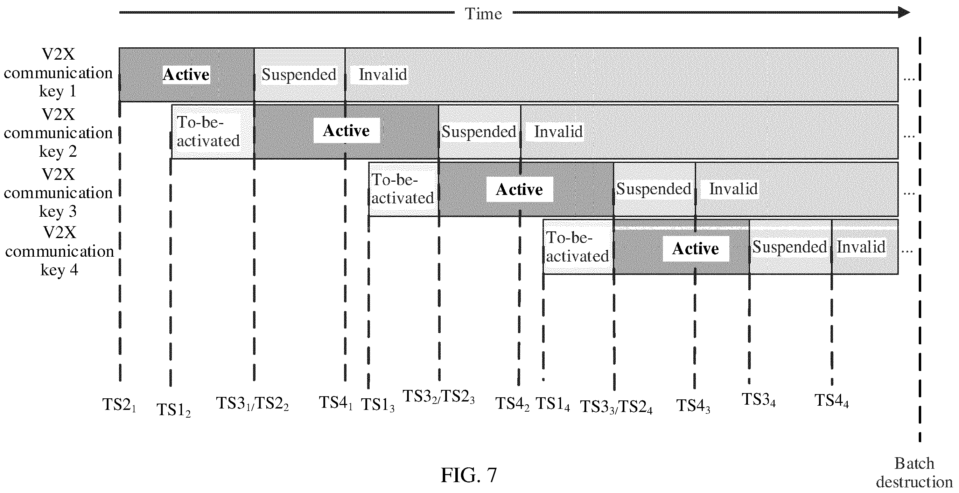

If each of the x V2X communication keys includes the to-be-activated state, the active state, the suspended state, and the invalid state, the time information corresponding to the i^{th} key indicates TS1ᵢ, TS2ᵢ, TS3ᵢ, and TS4ᵢ. Herein, TS1ᵢ+T1ᵢ=TS2ᵢ, TS2ᵢ+T2ᵢ=TS3ᵢ, and TS3ᵢ+T3ᵢ=TS4ᵢ. In the x V2X communication keys, a suspended state start moment of a previous key is equal to an active state start moment of a current key, that is, TS3ᵢ₋₁=TS2ᵢ. For example, as shown in FIG. 7, the N^{th} batch of key information includes a V2X communication key 1 to a V2X communication key 4.

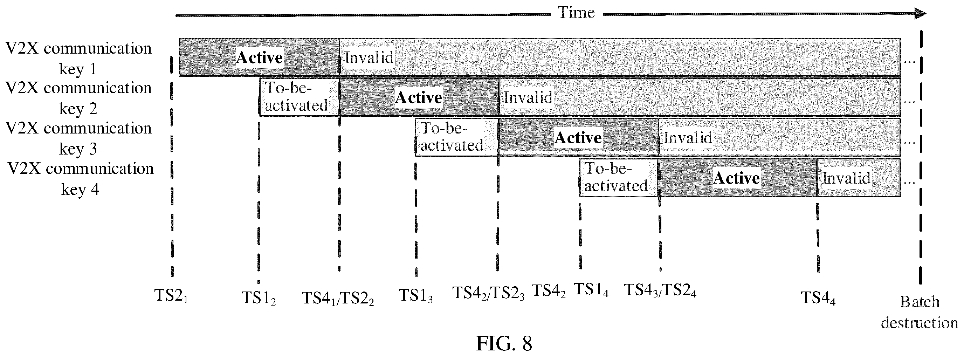

If each of the x V2X communication keys includes the to-be-activated state, the active state, and the invalid state, the time information corresponding to the i^{th} key indicates TS1ᵢ, TS2ᵢ, and TS4ᵢ. Herein, TS1ᵢ+T1ᵢ=TS2ᵢ, and TS2ᵢ+T2ᵢ=TS4ᵢ. In the x V2X communication keys, an invalid state start moment of a previous key is equal to an active state start moment of a current key, that is, TS4ᵢ₋₁=TS2ᵢ. For example, as shown in FIG. 8, the N^{th} batch of key information includes a V2X communication key 1 to a V2X communication key 4.

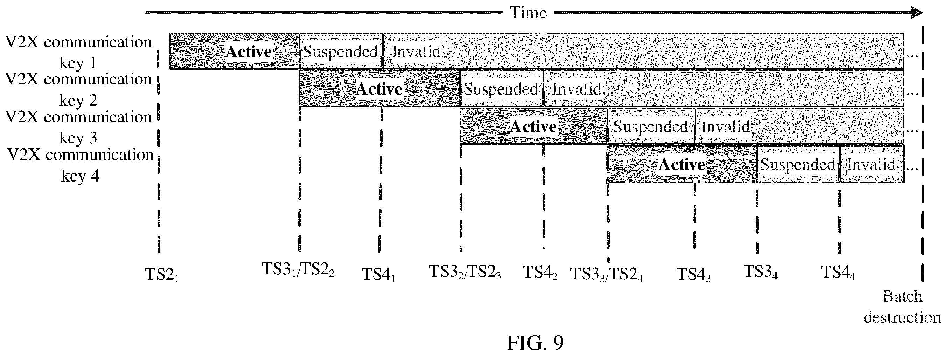

If each of the x V2X communication keys includes the active state, the suspended state, and the invalid state, the time information corresponding to the i^{th} key indicates TS2ᵢ, TS3ᵢ, and TS4ᵢ. Herein, TS2ᵢ+T2ᵢ=TS3ᵢ, and TS3ᵢ+T3ᵢ=TS4ᵢ. In the x V2X communication keys, a suspended state start moment of a previous key is equal to an active state start moment of a current key, that is, TS3ᵢ₋₁=TS2ᵢ. For example, as shown in FIG. 9, the N^{th} batch of key information includes a V2X communication key 1 to a V2X communication key 4.

A V2X communication key in the to-be-activated state is not allowed to be used to encrypt the V2X data, and is allowed to be used to decrypt the encrypted V2X data. A V2X communication key in the suspended state is not allowed to be used to encrypt the V2X data, and is allowed to be used to decrypt the encrypted V2X data. Alternatively, when there is no key in the active state in the first terminal device, a V2X communication key in the suspended state is allowed to be used to encrypt the V2X data.

If there is the suspended state for each V2X communication key before the invalid state, when a transmit end sends data by using the V2X communication key in the active state, a receive end may decrypt the data by using the V2X communication key in the suspended state. In this case, V2X communication can still be normally performed when system time of the transmit end and system time of the receive end of the V2X data are not synchronized (for example, the system time of the receive end is earlier than the system time of the transmit end). If there is the to-be-activated state for each key before the active state, when a transmit end sends data by using the V2X communication key in the active state, a receive end may decrypt the data by using the V2X communication key in the to-be-activated state. In this case, V2X communication can still be normally performed when system time of the transmit end and system time of the receive end of the V2X data are not synchronized (for example, the system time of the receive end is later than the system time of the transmit end). Therefore, the to-be-activated state and/or the suspended state are/is set for the V2X communication key, so that V2X communication can be normally performed when the system time of the transmit end and the system time of the receive end of the V2X data are not synchronized.

Optionally, if the time information corresponding to the i^{th} key indicates TS1ᵢ, TS2ᵢ, TS3ᵢ, and TS4ᵢ, the time information corresponding to the i^{th} key may indicate TS1ᵢ, TS2ᵢ, TS3ᵢ, and TS4ᵢ in the following three manners:
(1) The time information corresponding to the i^{th} key includes TS1ᵢ, TS2ᵢ, TS3ᵢ, and TS4ᵢ.
   In the manner (1), the first terminal device directly downloads TS1ᵢ, TS2ᵢ, TS3ᵢ, and TS4ᵢ from the server, that is, the time information corresponding to the i^{th} key explicitly indicates TS1ᵢ, TS2ᵢ, TS3ᵢ, and TS4ᵢ.
(2) The time information corresponding to the i^{th} key includes one or more of TS1ᵢ, TS2ᵢ, TS3ᵢ, and TS4ᵢ, and further includes T1ᵢ, T2ᵢ, and T3ᵢ.
   For example, the time information corresponding to the i^{th} key includes TS1ᵢ. Because TS1ᵢ+T1ᵢ=TS2ᵢ, TS2ᵢ+T2ᵢ=TS3ᵢ, and TS3ᵢ+T3ᵢ=TS4ᵢ, the first terminal device may determine TS2ᵢ, TS3ᵢ, and TS4ᵢ based on TS1ᵢ, T1ᵢ, T2ᵢ, and T3ᵢ.
(3) The time information corresponding to the i^{th} key includes one or more of TS1ᵢ, TS2ᵢ, TS3ᵢ, and TS4ᵢ, and T1ᵢ, T2ᵢ, and T3ᵢ are preset.

In the manner (3), T1ᵢ, T2ᵢ, and T3ᵢ are fixedly configured, and do not need to be indicated by the server. In the manner (2) and the manner (3), it may be understood as that the time information corresponding to the i^{th} key implicitly indicates TS1ᵢ, TS2ᵢ, TS3i, and TS4ᵢ.

It can be learned that TS1ᵢ, TS2ᵢ, TS3ᵢ, and TS4ᵢ can be accurately indicated in the foregoing three manners.

Optionally, if the time information corresponding to the i^{th} key indicates TS1ᵢ, TS2ᵢ, and TS4ᵢ, the time information corresponding to the i^{th} key may indicate TS1ᵢ, TS2ᵢ, and TS4ᵢ in the following three manners:
(1) The time information corresponding to the i^{th} key includes TS1ᵢ, TS2ᵢ, and TS4ᵢ.
   That is, the time information corresponding to the i^{th} key explicitly indicates TS1ᵢ, TS2ᵢ, and TS4ᵢ.
(2) The time information corresponding to the i^{th} key includes one or more of TS1ᵢ, TS2ᵢ, and TS4ᵢ, and further includes T1ᵢ and T2ᵢ.
   For example, the time information corresponding to the i^{th} key includes TS1ᵢ. Because TS1ᵢ+T1ᵢ=TS2ᵢ, and TS2ᵢ+T2ᵢ=TS4ᵢ, the first terminal device may determine TS2ᵢ and TS4ᵢ based on TS1ᵢ, T1ᵢ, and T2ᵢ.
(3) The time information corresponding to the i^{th} key includes one or more of TS1ᵢ, TS2ᵢ, and TS4ᵢ, and T1ᵢ and T2ᵢ are preset.

In the manner (3), T1ᵢ and T2ᵢ are fixedly configured, and do not need to be indicated by the server. In the manner (2) and the manner (3), it may be understood as that the time information corresponding to the i^{th} key implicitly indicates TS1ᵢ, TS2ᵢ, and TS4ᵢ.

It can be learned that TS1ᵢ, TS2ᵢ, and TS4ᵢ can be accurately indicated in the foregoing three manners.

Optionally, if the time information corresponding to the i^{th} key indicates TS2ᵢ, TS3ᵢ, and TS4ᵢ, the time information corresponding to the i^{th} key may indicate TS2ᵢ, TS3ᵢ, and TS4ᵢ in the following three manners:
(1) The time information corresponding to the i^{th} key includes TS2ᵢ, TS3ᵢ, and TS4ᵢ.
   That is, the time information corresponding to the i^{th} key explicitly indicates TS2ᵢ, TS3ᵢ, and TS4ᵢ.
(2) The time information corresponding to the i^{th} key includes one or more of TS2ᵢ, TS3ᵢ, and TS4ᵢ, and further includes T2ᵢ and T3ᵢ.
   For example, the time information corresponding to the i^{th} key includes TS2ᵢ. Because TS2ᵢ+T2ᵢ=TS3ᵢ, and TS3ᵢ+T3ᵢ=TS4ᵢ, the first terminal device may determine TS3ᵢ and TS4ᵢ based on TS2ᵢ, T2ᵢ, and T3ᵢ.
(3) The time information corresponding to the i^{th} key includes one or more of TS2ᵢ, TS3ᵢ, and TS4ᵢ, and T2ᵢ and T3ᵢ are preset.

In the manner (3), T2ᵢ and T3ᵢ are fixedly configured, and do not need to be indicated by the server. In the manner (2) and the manner (3), it may be understood as that the time information corresponding to the i^{th} key implicitly indicates TS2ᵢ, TS3ᵢ, and TS4ᵢ.

It can be learned that TS2ᵢ, TS3ᵢ, and TS4ᵢ can be accurately indicated in the foregoing three manners.

Optionally, the time information corresponding to the i^{th} key may further indicate an invalid state end moment TS5ᵢ. For example, the time information corresponding to the i^{th} key includes the invalid state end moment TS5ᵢ or T4ᵢ, or T4ᵢ is preset. T4ᵢ is invalid state duration of the i^{th} key. TS4ᵢ+T4ᵢ=TS5ᵢ. In this way, the first terminal device can determine the invalid state end moment TS5ᵢ of the i^{th} key, to destroy the i^{th} key after the invalid state end moment of the i^{th} key arrives. All keys in a batch may be destroyed at a same moment. Therefore, all the keys may correspond to different invalid state duration. Alternatively, all keys in a batch may be destroyed at different moments. This is not limited in this embodiment of this application.

Optionally, a specific implementation in which the first terminal device selects the first V2X communication key from the x V2X communication keys based on the local system time and the time information corresponding to each key is as follows: The first terminal device determines a status of one or more of the x V2X communication keys based on the local system time and the time information corresponding to each key; and the first terminal device selects the first V2X communication key from the one or more keys based on the status of the one or more keys. The local system time is system time of the first terminal device. Based on this possible implementation, a valid V2X communication key can be selected from the x V2X communication keys to encrypt the V2X data.

Optionally, after determining the status of the V2X communication key, the first terminal device may set a variable in a program, and specify the status of the V2X communication key by using a value of the variable. Alternatively, a value may be written into a file, the status of the V2X communication key may be specified by using the value, and a program determines the status of the V2X communication key based on the read value.

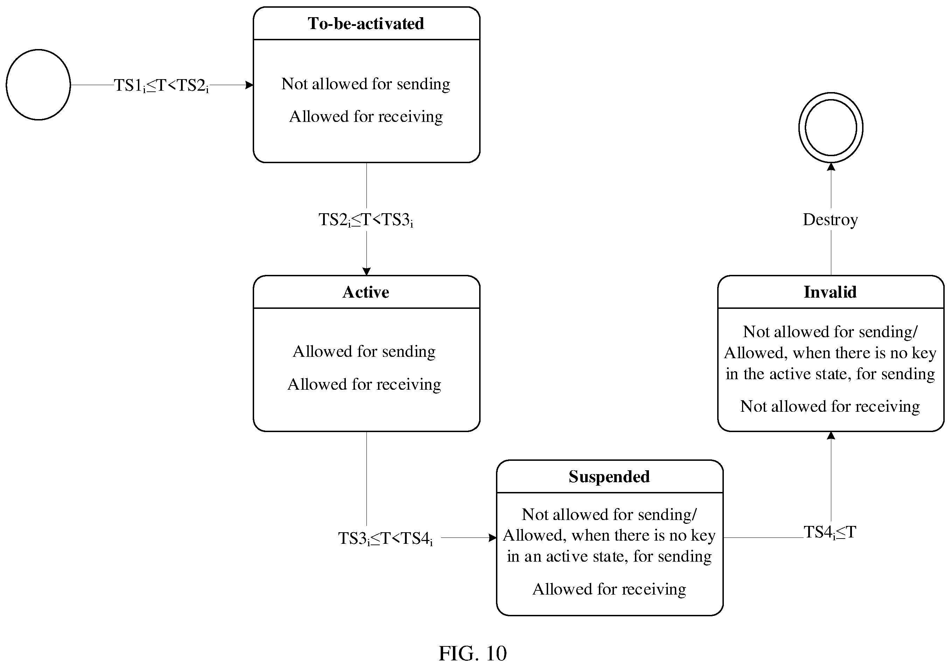

Optionally, a specific implementation in which the first terminal device determines the status of the one or more of the x V2X communication keys based on the local system time and the time information corresponding to each key is as follows: The first terminal device determines, if it is detected that TS1ᵢ≤T<TS2ᵢ, that the i^{th} key is in the to-be-activated state, where T is the local system time; the first terminal device switches the i^{th} key to the active state if it is detected, when the i^{th} key is in the to-be-activated state, that TS2ᵢ≤T<TS3ᵢ; the first terminal device switches the i^{th} key to the suspended state if it is detected, when the i^{th} key is in the active state, that TS3ᵢ≤T<TS4ᵢ; or the first terminal device switches the i^{th} key to the invalid state if it is detected, when the i^{th} key is in the suspended state, that TS4ᵢ≤T. Based on this possible implementation, the first terminal device can accurately determine the status of the key. For example, a schematic diagram of switching a key status may be shown in FIG. 10.

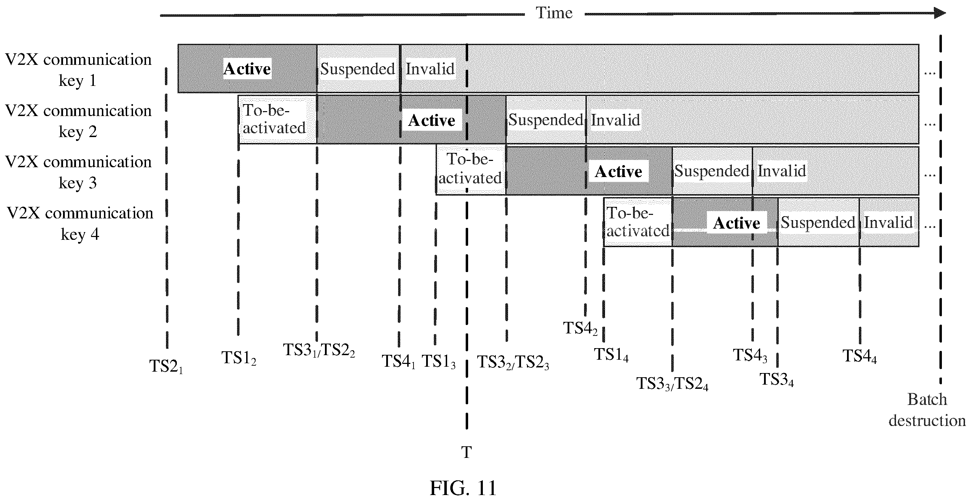

For example, the N^{th} batch of key information includes the V2X communication key 1 to the V2X communication key 4 and time information corresponding to the V2X communication key 1 to time information corresponding to the V2X communication key 4. As shown in FIG. 11, for the V2X communication key 1, because TS4₁≤T, the first terminal device determines that the V2X communication key 1 is in the invalid state; for a V2X communication key 2, because TS2₂≤T<TS3₂, the first terminal device determines that the V2X communication key 2 is in the active state; for a V2X communication key 3, because TS1₃≤T<TS2₃, the first terminal device determines that the V2X communication key 3 is in the to-be-activated state; and for the V2X communication key 4, because T<TS1₄, the first terminal device determines that the V2X communication key 4 is not in any one of the to-be-activated state, the active state, the suspended state, or the invalid state.

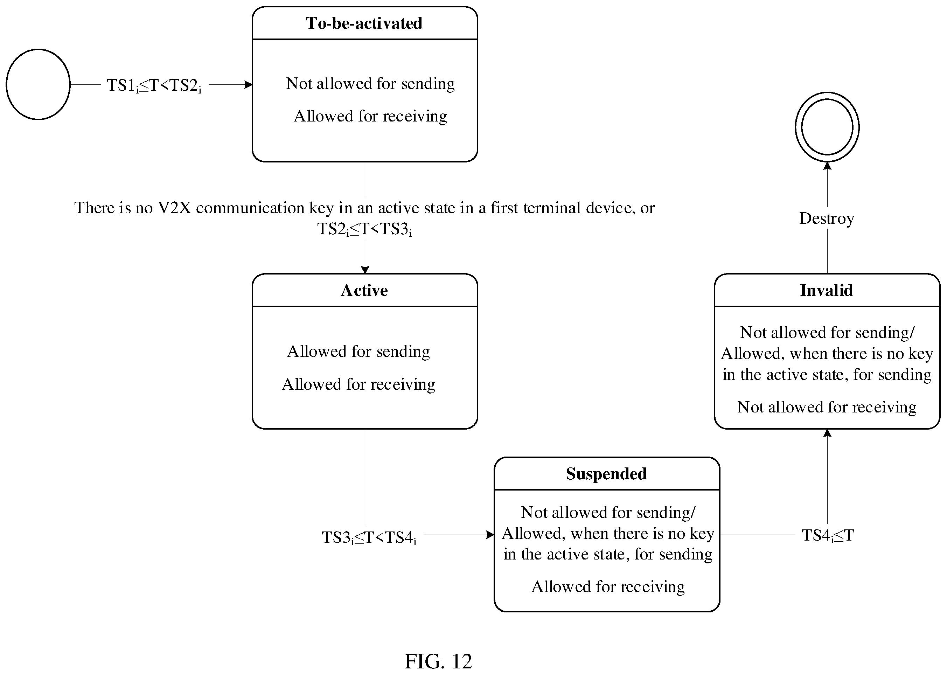

Optionally, when the i^{th} key is in the to-be-activated state, if there is no V2X communication key in the active state in the first terminal device, the first terminal device switches the i^{th} key to the active state. For example, a schematic diagram of switching a key status may be shown in FIG. 12. Based on this optional manner, normal V2X communication can be ensured when there is no V2X communication key in the active state in the first terminal device.

For example, for a first key in the first batch of key information, when the first key is in the to-be-activated state, there is no V2X communication key in the active state in the first terminal device. Therefore, after it is determined that the first key is in the to-be-activated state, the first key may be immediately switched from the to-be-activated state to the active state, and the first key can be switched from the to-be-activated state to the active state without waiting for an active state start moment TS2₁ to arrive.

For another example, as shown in FIG. 11, if the V2X communication key 2 is lost in the first terminal device, the first terminal device may switch the V2X communication key 3 from the to-be-activated state to the active state.

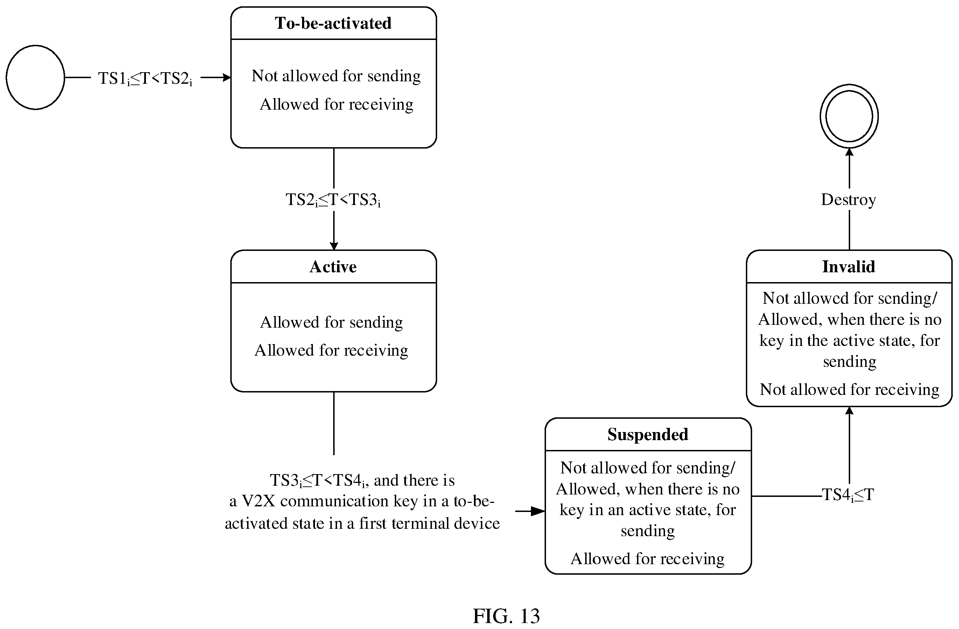

Optionally, a specific implementation in which the first terminal device switches the i^{th} key to the suspended state if TS3ᵢ≤T<TS4ᵢ when the i^{th} key is in the active state is as follows: The first terminal device switches the i^{th} key to the suspended state if TS3ᵢ≤T<TS4ᵢ and there is a V2X communication key in the to-be-activated state in the first terminal device when the i^{th} key is in the active state. For example, a schematic diagram of switching a key status may be shown in FIG. 13. Based on this optional manner, V2X communication can still be normally performed when the first terminal device fails to update a key batch.

For example, referring to FIG. 7, it is assumed that the local system time of the first terminal device is TS3₄, but the first terminal device fails to update a next batch of key information. Therefore, when the local system time of the first terminal device is TS3₄, there is no V2X communication key in the to-be-activated state in the first terminal device. The first terminal device keeps a key state of the V2X communication key 4 as the active state, that is, does not switch the key status of the V2X communication key 4 to the suspended state. In this way, the first terminal device can continue to perform V2X communication by using the V2X communication key 4, to ensure normal V2X communication.

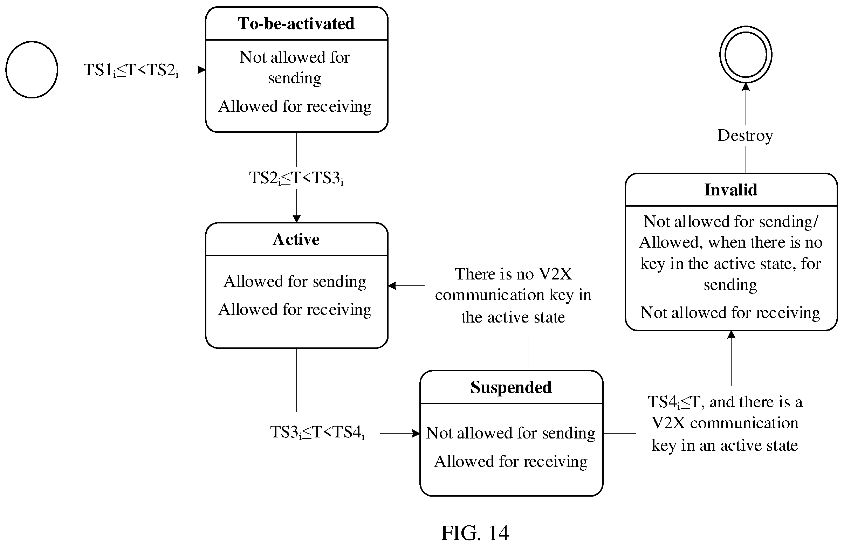

Optionally, the first terminal device switches the i^{th} key to the active state if there is no V2X communication key in the active state when the i^{th} key is in the suspended state; and a specific implementation in which the first terminal device switches the i^{th} key to the invalid state if TS4ᵢ≤T when the i^{th} key is in the suspended state is as follows: The first terminal device switches the i^{th} key to the invalid state if TS4ᵢ≤T and there is a V2X communication key in the active state when the i^{th} key is in the suspended state. For example, a schematic diagram of switching a key status may be shown in FIG. 14. Based on this optional manner, if the V2X communication key in the suspended state is not allowed to be used to encrypt the V2X data, V2X communication can still be normally performed when the V2X communication key in the active state is lost.

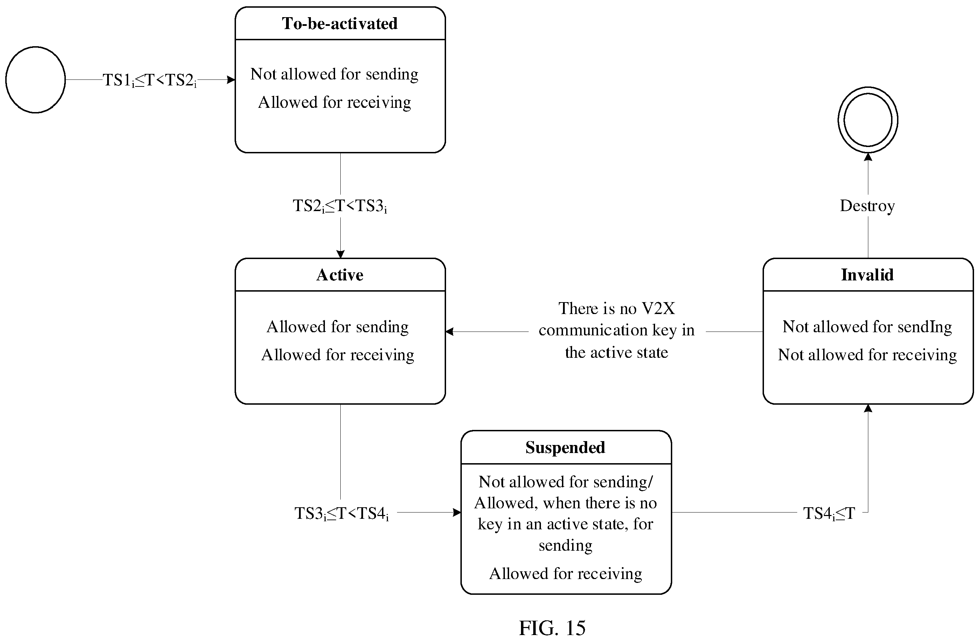

Optionally, the first terminal device switches the i^{th} key to the active state if there is no V2X communication key in the active state when the i^{th} key is in the invalid state. For example, a schematic diagram of switching a key status may be shown in FIG. 15. Optionally, if there are a plurality of V2X communication keys in the invalid state, the first terminal device may switch a latest V2X communication key in the invalid state to the active state, that is, the i^{th} key is the latest V2X communication key in the invalid state. Based on this optional manner, if the V2X communication key in the invalid state is not allowed to be used to encrypt the V2X data, V2X communication can still be normally performed when the V2X communication key in the active state is lost.

Optionally, the first V2X communication key is a key whose status is the active state. The V2X communication key in the active state is allowed to be used to encrypt the V2X data. Therefore, the first terminal device may select the V2X communication key in the active state to encrypt the V2X data.

Optionally, when there is no key in the active state in the one or more keys, the first V2X communication key is a key whose status is the suspended state or the invalid state. In this optional manner, when there is no key in the active state in the first terminal device, the V2X communication key in the suspended state or the invalid state is allowed to be used to encrypt the V2X data. When the i^{th} key is in the suspended state or the invalid state, if there is no V2X communication key in the active state in the first terminal device, the first terminal device does not need to switch the i^{th} key to the active state. and the first terminal device directly selects a key in the suspended state or the invalid state to encrypt the V2X data. Based on this optional manner, V2X communication can still be normally performed when the V2X communication key in the active state is lost.

It should be noted that in this embodiment of this application, the first terminal device may not need to determine or record a status of the V2X communication key, and when determining that a V2X communication key meets a switching condition of a key status, the first terminal device performs corresponding subsequent processing, that is, does not explicitly store the key status. For the switching condition of the key status, refer to the foregoing descriptions. Details are not described herein.

The status of the V2X communication key is described above. A status of a key batch is described below.

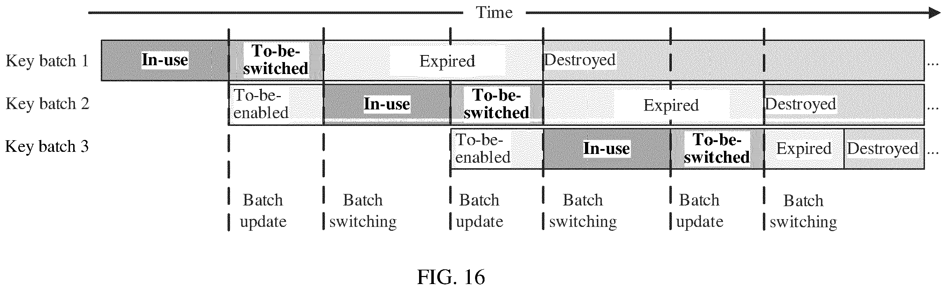

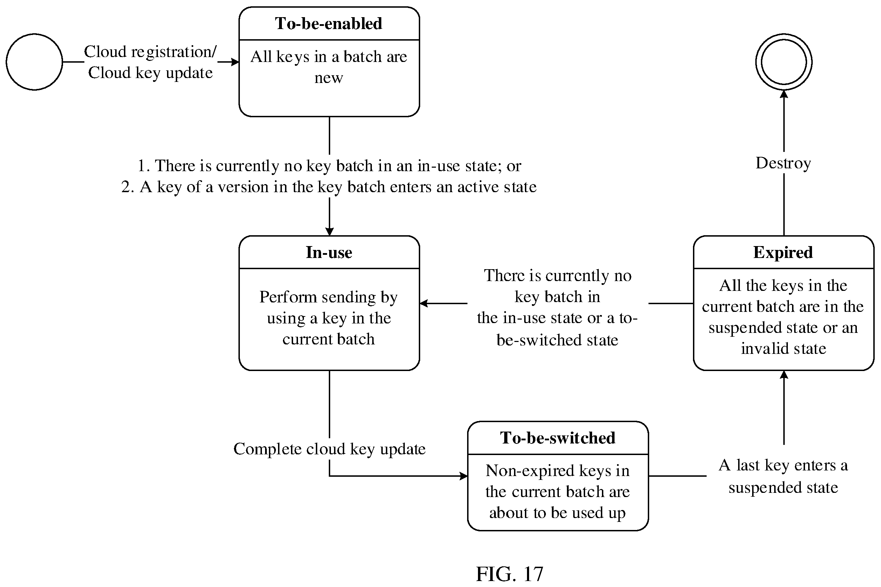

In a possible implementation, each key batch may have four states: a to-be-enabled state, an in-use state, a to-be-switched state, and an expired state. For ease of description, in this embodiment of this application, duration of states in an N^{th} key batch is respectively denoted as N_T1 (to-be-enabled state duration), N_T2 (in-use state duration), N_T3 (to-be-switched state duration), and N_T4 (expired state duration), and start moments of the states are respectively denoted as N_TS1 (to-be-enabled state start moment), N_TS2 (in-use state start moment), N_TS3 (to-be-switched state start moment), and N_TS4 (expired state start moment). Herein, N_TS1+N_T1=N_TS2, N_TS2+N_T2=N_TS3, N_TS3+N_T3=N_TS4, N_TS1=N-1_TS3, and N_TS2=N-1_TS4. For example, a schematic diagram of the status of each key batch may be shown in FIG. 16.
(1) To-be-enabled state: After completing cloud registration or a key update operation, the terminal switches the downloaded key batch to the to-be-enabled state. Therefore, N_TS1 is a moment at which downloading of a cloud key is completed. None of V2X communication keys in the key batch in the to-be-enabled state has ever entered the active state, that is, all V2X communication keys in the key batch in the to-be-enabled state are new. For example, a schematic diagram of switching the status of each key batch may be shown in FIG. 17.
(2) In-use state: When there is currently no key batch in the in-use state or a V2X communication key in the key batch enters the active state, the key batch is switched to the in-use state. Therefore, N_TS2 is a moment at which the V2X communication key in the key batch is switched to the active state for the first time.
(3) To-be-switched state: After completing a cloud key update operation, the terminal switches the key batch that is currently in the in-use state to the to-be-switched state. The key batch in the to-be-switched state is still normally used, and includes a V2X communication key in the active state.
(4) Expired state: If the V2X communication key has only the active state and the invalid state, when a last V2X communication key in the key batch in the to-be-switched state is switched to the invalid state, the key batch is in the expired state. If the V2X communication key has the to-be-activated state in addition to the active state and the invalid state, when a last V2X communication key in the key batch in the to-be-switched state is switched to the invalid state, the key batch is in the expired state. If the V2X communication key has the suspended state in addition to the active state and the invalid state. when a last V2X communication key in the key batch in the to-be-switched state is switched to the suspended state, the key batch is in the expired state. If the V2X communication key has the to-be-activated state and the suspended state in addition to the active state and the invalid state, when a last V2X communication key in the key batch in the to-be-switched state is switched to the suspended state, the key batch is in the expired state.

Optionally, if there is currently no key batch in the in-use state or the to-be-switched state locally, the key batch in the expired state is switched to the in-use state. Correspondingly, as described above, if there is no key in the active state in the first terminal device, a V2X communication key in the suspended state or the invalid state may be switched to the active state.

Alternatively, if there is currently no key batch in the in-use state or the to-be-switched state locally, the key batch in the expired state may not be switched to the in-use state, and V2X communication may be directly performed by using a key in the key batch in the expired state. Correspondingly, as described above, if there is no key in the active state in the first terminal device, V2X communication may be performed by using a V2X communication key in the suspended state or the invalid state.

204: The first terminal device encrypts the V2X data by using the first V2X communication key, to obtain encrypted V2X data.

It can be learned that in the method described in FIG. 2, the first terminal device may update a batch of key information from the server at a time, and therefore does not need to update the key information from the server in real time. Therefore, based on the method described in FIG. 2, a terminal device that does not have a real-time network connection capability can normally perform V2X communication.

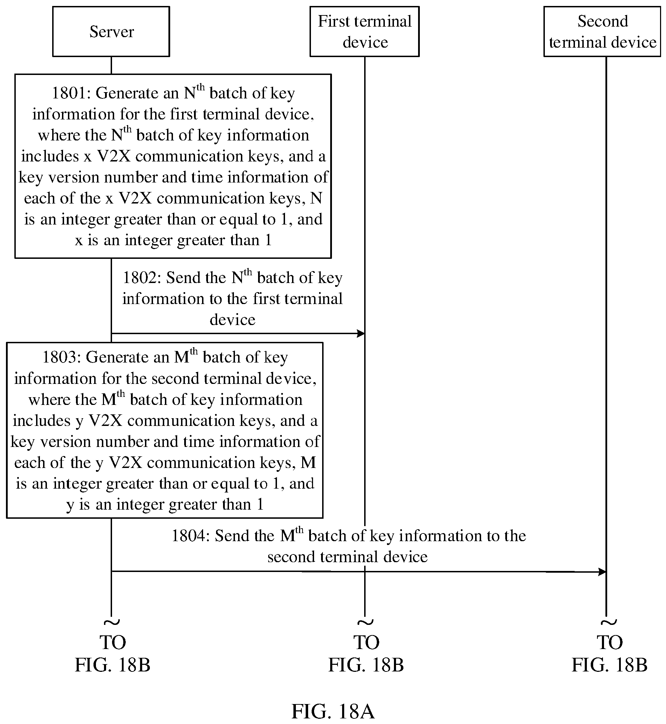

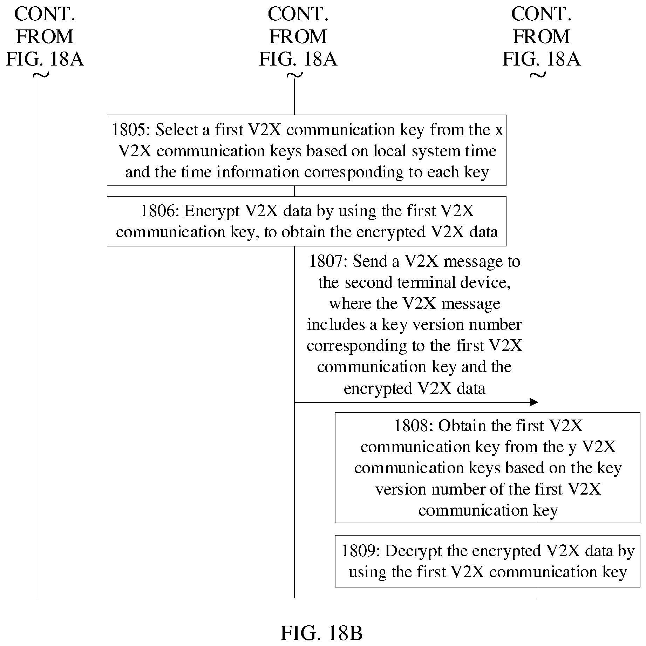

FIG. 18A and FIG. 18B are a schematic flowchart of a method for updating a V2X communication key according to an embodiment of this application. As shown in FIG. 18A and FIG. 18B, the method for updating a V2X communication key includes the following steps 1801 to 1809. The method shown in FIG. 18A and FIG. 18B may be performed by a server, a first terminal device, and a second terminal device. Alternatively, the method shown in FIG. 18A and FIG. 18B may be performed by a chip in a server, a chip in a first terminal device, and a chip in a second terminal device. In FIG. 18A and FIG. 18B, an example in which the method is performed by the first terminal device and the second terminal device is used for description.

1801: The server generates an N^{th} batch of key information for the first terminal device, where the N^{th} batch of key information includes x V2X communication keys, and a key version number and time information of each of the x V2X communication keys, N is an integer greater than or equal to 1, and x is an integer greater than 1.

1802: The server sends the N^{th} batch of key information to the first terminal device. Correspondingly, the first terminal device receives the N^{th} batch of key information sent by the server.

For step 1801 and step 1802, refer to the descriptions in step 201 and step 202. Details are not described herein.

1803: The server generates an M^{th} batch of key information for the second terminal device, where the M^{th} batch of key information includes y V2X communication keys, and a key version number and time information of each of the y V2X communication keys, M is an integer greater than or equal to 1, and y is an integer greater than 1.

In this embodiment of this application, V2X communication is performed between the first terminal device and the second terminal device. The first terminal device and the second terminal device may be terminal devices that perform V2X communication, for example, vehicles, infrastructures, or smartphones.

The M^{th} batch of key information may be a first batch of key information, or may not be a first batch of key information. N and M may be the same or different, that is, a key batch obtained by the first terminal device may be the same as or different from a key batch obtained by the second terminal device; and x and y may be the same or different, that is, a quantity of keys in the N^{th} batch of key information may be the same as or different from a quantity of keys in the M^{th} batch of key information. The key version number may alternatively be information used to identify the key, for example, a key number.

For example, a first batch of key information obtained by the first terminal device from the server includes a V2X communication key 1 to a V2X communication key 10. When there are four available keys remaining in the first batch of key information, the first terminal device requests a second batch of key information from the server. The second batch of key information generated by the server for the first terminal device includes a V2X communication key 7 to a V2X communication key 17. When there are four available keys remaining in the second batch of key information, the first terminal device requests a third batch of key information from the server. The third batch of key information generated by the server for the first terminal device includes a V2X communication key 14 to a V2X communication key 24.

The first batch of key information obtained by the second terminal device from the server includes the V2X communication key 1 to the V2X communication key 10. When there are four available keys remaining in the first batch of keys, the second terminal device requests a second batch of key information from the server. The second batch of key information generated by the server for the second terminal device includes the V2X communication key 7 to the V2X communication key 17. However, the second terminal device is disconnected from a network for a period of time. Therefore, when the second terminal device requests a key from the server for the third time, the server finds that a V2X communication key 18 is a key that is currently in an active state. Therefore, a third batch of key information generated by the server for the second terminal device includes the V2X communication key 18 to a V2X communication key 28.

1804: The server sends the M^{th} batch of key information to the second terminal device. Correspondingly, the second terminal device receives the N^{th} batch of key information sent by the server.

1805: The first terminal device selects a first V2X communication key from the x V2X communication keys based on local system time and the time information corresponding to each key.

1806: The first terminal device encrypts V2X data by using the first V2X communication key, to obtain encrypted V2X data.

In this embodiment of this application, for specific implementations of step 1804 to step 1806, refer to the descriptions in step 203 and step 204. Details are not described herein.

1807: The first terminal device sends a V2X message to the second terminal device, where the V2X message includes a key version number corresponding to the first V2X communication key and the encrypted V2X data.

In this embodiment of this application, after encrypting the V2X data content by using the first V2X communication key, the first terminal device needs to include the key version number of the first V2X communication key and the encrypted V2X data in the V2X message for sending.

In a possible implementation, the V2X message further includes an initialization vector used to encrypt the V2X data. The initialization vector is an input parameter required by a decryption algorithm. Therefore, based on this possible implementation, the second terminal device can successfully decrypt the encrypted V2X data.

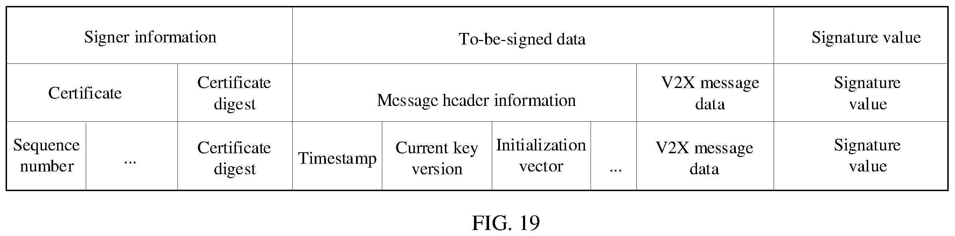

Optionally, the V2X message includes a to-be-signed data field, the to-be-signed data field includes a message header information field, the message header information field includes a key version field and an initialization vector field, the key version number corresponding to the first V2X communication key is carried in the key version field, and the initialization vector is carried in the initialization vector field. For example, a format definition of the V2X message is shown in FIG. 19.

When the key version field and the initialization vector field are included in the to-be-signed data field, content of the two fields is involved in a process of calculating a message digital signature. This can protect content integrity and source identity authenticity of the two fields.

Optionally, the key version field and the initialization vector field may not be included in the message header information field, but may be included in a V2X message data field.

1808: The second terminal device obtains the first V2X communication key from the y V2X communication keys based on the key version number of the first V2X communication key.

1809: The second terminal device decrypts the encrypted V2X data by using the first V2X communication key.

It can be learned that in the method described in FIG. 18A and FIG. 18B, the first terminal device and the second terminal device may update a batch of key information from the server at a time, and therefore do not need to update the key information from the server in real time. Therefore, based on the method described in FIG. 18A and FIG. 18B, a terminal device that does not have a real-time network connection capability can normally perform V2X communication.

In a possible implementation, before the second terminal device decrypts the encrypted V2X data by using the first V2X communication key, the second terminal device determines, based on local system time and time information corresponding to the first V2X communication key, that the first V2X communication key is valid. By determining that the key is valid, a device that does not have a valid communication key can be prevented from forging an encrypted message. A device that does not have a communication key cannot use a valid key to encrypt a message, and may use an expired or destroyed key to encrypt a message. After receiving the forged message, the second terminal device may discover this case through validity check. In addition, when it is determined, before decryption, that the key is valid, an invalid decryption process can be reduced, to help improve performance.

Optionally, the second terminal device may first determine that the first V2X communication key is valid, and then perform step 1808. Alternatively, after the second terminal device performs step 1808, the second terminal device may determine, based on the local system time and the time information corresponding to the first V2X communication key, that the first V2X communication key is valid, and then perform step 1809.

In a possible implementation, a status of each of the y V2X communication keys includes an active state and an invalid state, time information corresponding to a j^{th} key in the y V2X communication keys indicates TS2ⱼ and TS4ⱼ, TS2ⱼ is an active state start moment of the j^{th} key, and TS4ⱼ is an invalid state start moment of the j^{th} key, where j is greater than 0 and less than or equal to y.

In a possible implementation, the status of each of the y V2X communication keys further includes a to-be-activated state and/or a suspended state, the time information corresponding to the j^{th} key further indicates TS1ⱼ and/or TS3ⱼ, TS1ⱼ is a to-be-activated state start moment of the j^{th} key, TS3ⱼ is a suspended state start moment of the j^{th} key, and in the y V2X communication keys, a suspended state start moment of a previous key is equal to an active state start moment of a current key.

In a possible implementation, the time information corresponding to the j^{th} key includes TS2ⱼ and TS4ⱼ, and further includes TS1ⱼ and/or TS3ⱼ; the time information corresponding to the j^{th} key includes one or more of TS1ⱼ, TS2ⱼ, and TS4ⱼ, and further includes T1ⱼ and T2ⱼ; the time information corresponding to the j^{th} key includes one or more of TS2ⱼ, TS3ⱼ, and TS4ⱼ, and further includes T2ⱼ and T3ⱼ; the time information corresponding to the j^{th} key includes one or more of TS1ⱼ, TS2ⱼ, TS3ⱼ, and TS4ⱼ, and further includes T1ⱼ, T2ⱼ, and T3ⱼ; the time information corresponding to the j^{th} key includes one or more of TS1ⱼ, TS2ⱼ, and TS4ⱼ, and T1ⱼ and T2ⱼ are preset; the time information corresponding to the j^{th} key includes one or more of TS2ⱼ, TS3ⱼ, and TS4ⱼ, and T2ⱼ and T3ⱼ are preset; or the time information corresponding to the j^{th} key includes one or more of TS1ⱼ, TS2ⱼ, TS3ⱼ, and TS4ⱼ, and T1ⱼ, T2ⱼ, and T3ⱼ are preset; and T1ⱼ is to-be-activated state duration of the j^{th} key in the y V2X communication keys, T2ⱼ is active state duration of the j^{th} key, and T3ⱼ is suspended state duration of the j^{th} key.

In a possible implementation, a specific implementation in which the second terminal device determines, based on the local system time and the time information corresponding to the first V2X communication key, that the first V2X communication key is valid is as follows: The second terminal device determines, based on the local system time and the time information corresponding to the first V2X communication key, that a status of the first V2X communication key is the to-be-activated state, the active state, or the suspended state.

As described above, a V2X communication key in the active state is allowed to be used to encrypt the V2X data, and is allowed to be used to decrypt the encrypted V2X data. A V2X communication key in the to-be-activated state is not allowed to be used to encrypt the V2X data, and is allowed to be used to decrypt the encrypted V2X data. A V2X communication key in the suspended state is not allowed to be used to encrypt the V2X data, and is allowed to be used to decrypt the encrypted V2X data. Alternatively, when there is no key in the active state in the first terminal device, a V2X communication key in the suspended state is allowed to be used to encrypt the V2X data. Therefore, if it is determined that the status of the first V2X communication key is the to-be-activated state, the active state, or the suspended state, the first V2X communication key is valid, and the first terminal device may decrypt the encrypted V2X data by using the first V2X communication key. Based on this possible implementation, V2X communication can still be normally performed when system time of a transmit end and system time of a receive end of the V2X data are not synchronized.

In a possible implementation, a specific implementation in which the second terminal device determines the status of the first V2X communication key based on the local system time and the time information corresponding to the first V2X communication key is as follows: The second terminal device determines, if TS1≤T<TS2, that the first V2X communication key is in the to-be-activated state, where T is the local system time; the second terminal device switches the first V2X communication key to the active state if TS2≤T<TS3 when the first V2X communication key is in the to-be-activated state; or the second terminal device switches the first V2X communication key to the suspended state if TS3≤T<TS4 when the first V2X communication key is in the active state, where TS1 is a to-be-activated state start moment of the first V2X communication key, TS2 is an active state start moment of the first V2X communication key, TS3 is a suspended state start moment of the first V2X communication key, and TS4 is an invalid state start moment of the first V2X communication key.

In a possible implementation, the second terminal device switches the first V2X communication key to the active state if there is no V2X communication key in the active state in the second terminal device when the first V2X communication key is in the to-be-activated state.

In a possible implementation, a specific implementation in which the second terminal device switches the first V2X communication key to the suspended state if TS3≤T<TS4 when the first V2X communication key is in the active state is as follows: The second terminal device switches the first V2X communication key to the suspended state if TS3≤T<TS4 and there is a V2X communication key in the to-be-activated state in the second terminal device when the first V2X communication key is in the active state.

In a possible implementation, the second terminal device switches the first V2X communication key to the active state if there is no V2X communication key in the active state when the first V2X communication key is in the suspended state.

In a possible implementation, the second terminal device switches the first V2X communication key to the active state if there is no V2X communication key in the active state when the first V2X communication key is in the invalid state.

It should be noted that for a same V2X communication key, time information corresponding to the key sent by the server to all terminal devices is the same. For related descriptions of the time information corresponding to the V2X communication key in the M^{th} batch of key information, refer to the foregoing related descriptions of the time information corresponding to the V2X communication key in the N^{th} batch of key information. Details are not described herein. A switching condition of a status of the V2X communication key in the second terminal device and beneficial effects are the same as the switching condition of the status of the V2X communication key in the first terminal device and the beneficial effects. Details are not described herein.

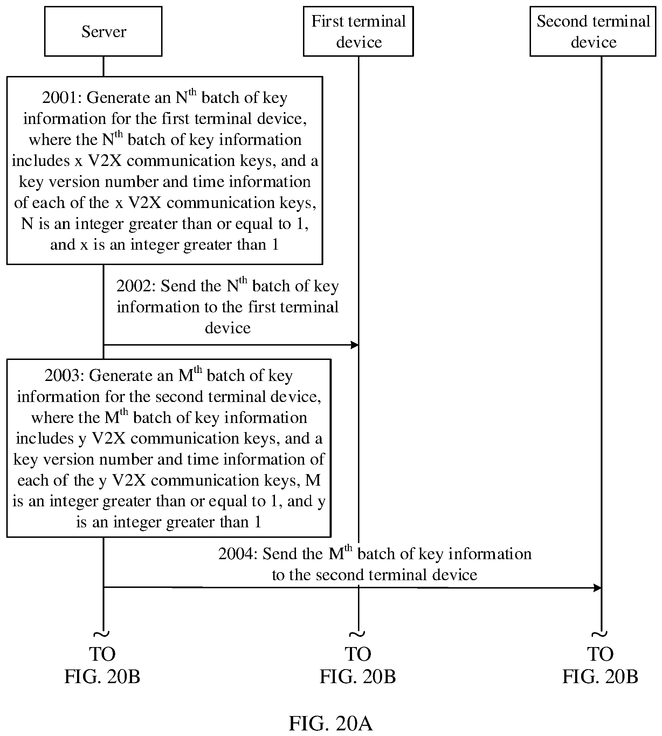

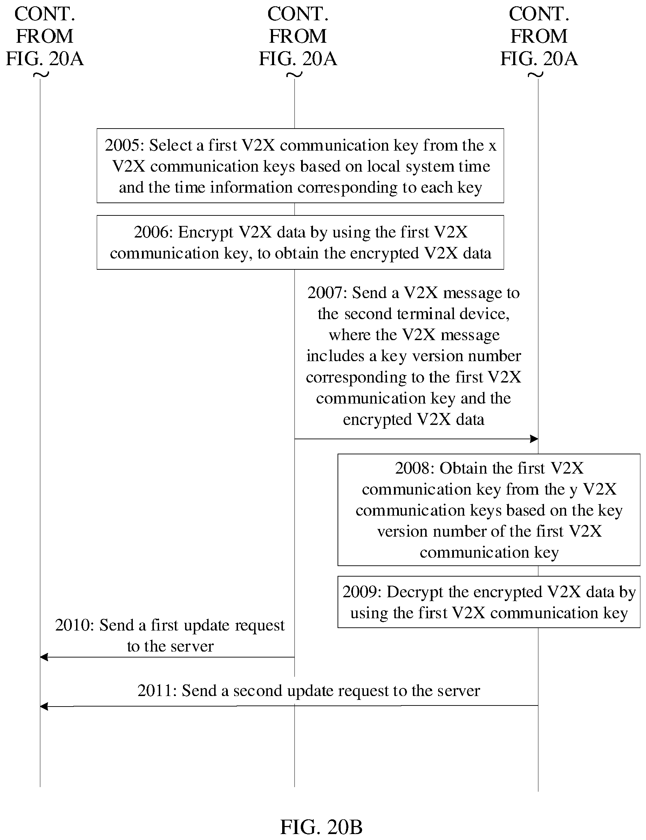

FIG. 20A and FIG. 20B are a schematic flowchart of a method for updating a V2X communication key according to an embodiment of this application. As shown in FIG. 20A and FIG. 20B, the method for updating a V2X communication key includes the following steps 2001 to 2011. The method shown in FIG. 20A and FIG. 20B may be performed by a server, a first terminal device, and a second terminal device. Alternatively, the method shown in FIG. 20A and FIG. 20B may be performed by a chip in a server, a chip in a first terminal device, and a chip in a second terminal device. In FIG. 20A and FIG. 20B, an example in which the method is performed by the first terminal device and the second terminal device is used for description.

2001: The server generates an N^{th} batch of key information for the first terminal device, where the N^{th} batch of key information includes x V2X communication keys, and a key version number and time information of each of the x V2X communication keys, N is an integer greater than or equal to 1, and x is an integer greater than 1.

2002: The server sends the N^{th} batch of key information to the first terminal device. Correspondingly, the first terminal device receives the N^{th} batch of key information sent by the server.

2003: The server generates an M^{th} batch of key information for the second terminal device, where the M^{th} batch of key information includes y V2X communication keys, and a key version number and time information of each of the y V2X communication keys, M is an integer greater than or equal to 1, and y is an integer greater than 1.

2004: The server sends the M^{th} batch of key information to the second terminal device. Correspondingly, the second terminal device receives the N^{th} batch of key information sent by the server.

2005: The first terminal device selects a first V2X communication key from the x V2X communication keys based on local system time and the time information corresponding to each key.

2006: The first terminal device encrypts V2X data by using the first V2X communication key, to obtain encrypted V2X data.

2007: The first terminal device sends a V2X message to the second terminal device, where the V2X message includes a key version number corresponding to the first V2X communication key and the encrypted V2X data.

2008: The second terminal device obtains the first V2X communication key from the y V2X communication keys based on the key version number of the first V2X communication key.

2009: The second terminal device decrypts the encrypted V2X data by using the first V2X communication key.

In this embodiment of this application, for specific implementations of step 2001 to step 2009, refer to the descriptions in step 1801 to step 1809. Details are not described herein.

2010: The first terminal device sends a first update request to the server. Correspondingly, the server may receive the first update request.

In this embodiment of this application, there may be the following four trigger conditions for the first terminal device to send the first update request to the server:
(1) The first update request is sent to the server when a time interval between the local system time and an activation start moment of a first target key in the x V2X communication keys reaches first preset duration, where the first update request is used to request an (N+1)^{th} batch of key information, and the first target key is a key that first enters an active state in the x V2X communication keys.

For example, it is assumed that the N^{th} batch of key information includes 10 V2X communication keys: a V2X communication key 1 to a V2X communication key 10, and the V2X communication key 1 is a key that first enters the active state in the N^{th} batch of key information. If a time interval between an activation start moment of the V2X communication key 1 and the local system time reaches the first preset duration, it indicates that the N^{th} batch of key information has been used for a relatively long time, and keys in the N^{th} batch of key information are about to be used up. Therefore, the server may be requested to update a next batch of keys.

Based on this key update manner, when keys in the N^{th} batch of key information are not used up, a next batch of key information can be updated, that is, the key information can be updated in advance. In this way, even if the first terminal device is temporarily disconnected from a network, there is no case in which no key is available for the terminal, and a case in which the first terminal device cannot be connected to the network for a period of time is allowed.

(2) The first update request is sent to the server when a time interval between the local system time and a suspension moment of a last key in the x V2X communication keys is less than second preset duration.

For example, it is assumed that the N^{th} batch of key information includes 10 V2X communication keys: a V2X communication key 1 to a V2X communication key 10. If a time interval between a suspension moment of the V2X communication key 10 and the local system time is less than the second preset duration, it indicates that the N^{th} batch of key information has been used for a relatively long time, and keys in the N^{th} batch of key information are about to be used up. Therefore, the server may be requested to update a next batch of keys.

Based on this key update manner, when keys in the N^{th} batch of key information are not used up, a next batch of key information can be updated, that is, the key information can be updated in advance. In this way, even if the first terminal device is temporarily disconnected from a network, there is no case in which no key is available for the terminal, and a case in which the first terminal device cannot be connected to the network for a period of time is allowed.

(3) The first update request is sent to the server when a quantity of used keys in the x V2X communication keys is greater than a first threshold.

The used key is a key used by the first terminal device to encrypt the V2X data.

Based on this key update manner, when keys in the N^{th} batch of key information are not used up, a next batch of key information can be updated, that is, the key information can be updated in advance. In this way, even if the first terminal device is temporarily disconnected from a network, there is no case in which no key is available for the terminal, and a case in which the first terminal device cannot be connected to the network for a period of time is allowed.

(4) The first update request is sent to the server when a quantity of remaining to-be-used keys in the x V2X communication keys is less than a second threshold.

The remaining to-be-used key is a key that is in the x V2X communication keys and that is not used by the first terminal device to encrypt the V2X data. For example, if the x V2X communication keys include 10 V2X communication keys: a V2X communication key 1 to a V2X communication key 10, and the first terminal device encrypts the V2X data by using the V2X communication key 1 to a V2X communication key 5, the quantity of remaining to-be-used keys is 5.

Based on this key update manner, when keys in the N^{th} batch of key information are not used up, a next batch of key information can be updated, that is, the key information can be updated in advance. In this way, even if the first terminal device is temporarily disconnected from a network, there is no case in which no key is available for the terminal, and a case in which the first terminal device cannot be connected to the network for a period of time is allowed.

In a possible implementation, the first update request is used to request an (N+1)^{th} batch of key information, and the first update request carries a quantity of V2X communication keys that need to be applied for; and the first terminal device may further receive the (N+1)^{th} batch of key information from the server, where the (N+1)^{th} batch of key information includes p V2X communication keys and time information corresponding to each of the p V2X communication keys, and p is equal to the quantity of V2X communication keys. Optionally, the (N+1)^{th} batch of key information may further include a key version number corresponding to each of the p V2X communication keys.

In this possible implementation, the first terminal device may specify the quantity of V2X communication keys for the server. The server searches for a key that is currently in the active state, and constructs the (N+1)^{th} batch of key information for the first terminal device based on the quantity of V2X communication keys specified by the first terminal device. Based on this possible implementation, the first terminal device can more flexibly update the V2X communication key.

2011: The second terminal device sends a second update request to the server. Correspondingly, the server may receive the second update request.

In this embodiment of this application, there may be the following four trigger conditions for the second terminal device to send the second update request to the server:
(1) The second update request is sent to the server when a time interval between local system time and an activation start moment of a second target key in the y V2X communication keys reaches the first preset duration, where the second update request is used to request to obtain an (X+1)^{th} batch of key information, and the second target key is a key that first enters the active state in the y V2X communication keys.
(2) The second update request is sent to the server when a time interval between local system time and a suspension moment of a last key version in the y V2X communication keys is less than the second preset duration.
(3) The second update request is sent to the server when a quantity of used keys in the y V2X communication keys is greater than the first threshold.
(4) The second update request is sent to the server when a quantity of remaining to-be-used keys in the y V2X communication keys is less than the second threshold.

For specific descriptions of the four trigger conditions for the second terminal device to send the second update request to the server, refer to the specific descriptions of the four trigger conditions for the first terminal device to send the first update request to the server. Details are not described herein.

In a possible implementation, the second update request is used to request an (M+1)^{th} batch of key information, and the second update request carries a quantity of V2X communication keys that need to be applied for; and the second terminal device receives the (M+1)^{th} batch of key information from the server, where the (M+1)^{th} batch of key information includes q V2X communication keys, and a key version number and time information corresponding to each of the q V2X communication keys, and q is equal to the quantity of V2X communication keys.

The quantity of V2X communication keys carried in the first update request may be the same as or different from the quantity of V2X communication keys carried in the second update request.

In this possible implementation, the second terminal device may specify the quantity of V2X communication keys for the server. The server searches for a key that is currently in the active state, and constructs the (N+1)^{th} batch of key information for the second terminal device based on the quantity of V2X communication keys specified by the second terminal device. Based on this possible implementation, the first terminal device can more flexibly update the V2X communication key.

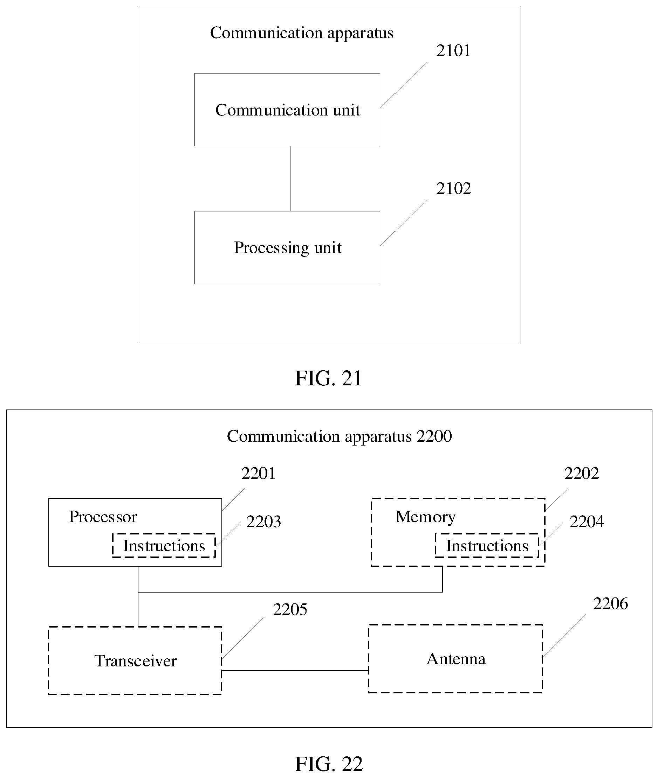

FIG. 21 is a schematic diagram of a structure of a communication apparatus according to an embodiment of this application. The communication apparatus shown in FIG. 21 may be configured to perform some or all functions of the first terminal device in the method embodiment described in FIG. 2, FIG. 18A and FIG. 18B, or FIG. 20A and FIG. 20B. The apparatus may be a first terminal device, an apparatus in a first terminal device, or an apparatus that can be used together with a first terminal device. The communication apparatus may alternatively be a chip system. The communication apparatus shown in FIG. 21 may include a communication unit 2101 and a processing unit 2102. The processing unit 2102 is configured to perform data processing. A receiving unit and a sending unit are integrated into the communication unit 2101. The communication unit 2101 may also be referred to as a transceiver unit. Alternatively, the communication unit 2101 may be split into a receiving unit and a sending unit. The processing unit 2102 and the communication unit 2101 below are similar to those. Details are not described below.

The communication unit 2101 is configured to receive an N^{th} batch of key information sent by a server, where the N^{th} batch of key information includes x V2X communication keys and time information corresponding to each of the x V2X communication keys, N is an integer greater than or equal to 1, and x is an integer greater than 1. The processing unit 2102 is configured to select a first V2X communication key from the x V2X communication keys based on local system time and the time information corresponding to each key. The processing unit 2102 is further configured to encrypt V2X data by using the first V2X communication key, to obtain encrypted V2X data.

In a possible implementation, the N^{th} batch of key information further includes a key version number corresponding to each of the x V2X communication keys; and the communication unit 2101 is further configured to send a V2X message to a second terminal device, where the V2X message includes a key version number corresponding to the first V2X communication key and the encrypted V2X data.

In a possible implementation, each of the x V2X communication keys includes an active state and an invalid state, time information corresponding to an i^{th} key in the x V2X communication keys indicates TS2ᵢ and TS4ᵢ, TS2ᵢ is an active state start moment of the i^{th} key, and TS4ᵢ is an invalid state start moment of the i^{th} key, where i is greater than 0 and less than or equal to x.

In a possible implementation, a status of each of the x V2X communication keys further includes a to-be-activated state and/or a suspended state, the time information corresponding to the i^{th} key further indicates TS1ᵢ and/or TS3ᵢ, TS1ᵢ is a to-be-activated state start moment of the i^{th} key, TS3ᵢ is a suspended state start moment of the i^{th} key, and in the x V2X communication keys, a suspended state start moment of a previous key is equal to an active state start moment of a current key.

In a possible implementation, a manner in which the processing unit 2102 selects the first V2X communication key from the x V2X communication keys based on the local system time and the time information corresponding to each key is specifically: determining a status of one or more of the x V2X communication keys based on the local system time and the time information corresponding to each key; and selecting the first V2X communication key from the one or more keys based on the status of the one or more keys.

In a possible implementation, a manner in which the processing unit 2102 determines the key state of the one or more of the x V2X communication keys based on the local system time and the time information corresponding to each key is specifically: determining, if it is detected that TS1ᵢ≤T<TS2ᵢ, that the i^{th} key is in the to-be-activated state, where T is the local system time; switching the i^{th} key to the active state if it is detected, when the i^{th} key is in the to-be-activated state, that TS2ᵢ≤T<TS3ᵢ; switching the i^{th} key to the suspended state if it is detected, when the i^{th} key is in the active state, that TS3ᵢ≤T<TS4ᵢ; or switching the i^{th} key to the invalid state if it is detected, when the i^{th} key is in the suspended state, that TS4ᵢ≤T.

In a possible implementation, the processing unit 2102 is further configured to switch the i^{th} key to the active state if it is detected, when the i^{th} key is in the to-be-activated state, that there is no V2X communication key in the active state in the communication apparatus.

In a possible implementation, a manner in which the processing unit 2102 switches the i^{th} key to the suspended state if it is detected, when the i^{th} key is in the active state, that TS3ᵢ≤T<TS4ᵢ is specifically: switching the i^{th} key to the suspended state if it is detected, when the i^{th} key is in the active state, that TS3ᵢ≤T<TS4ᵢ and there is a V2X communication key in the to-be-activated state in the communication apparatus.

In a possible implementation, the processing unit 2102 is further configured to switch the i^{th} key to the active state if it is detected, when the i^{th} key is in the suspended state, that there is no V2X communication key in the active state in the communication apparatus; and a manner in which the processing unit 2102 switches the i^{th} key to the invalid state if it is detected, when the i^{th} key is in the suspended state, that TS4ᵢ≤T is specifically: switching the i^{th} key to the invalid state if it is detected, when the i^{th} key is in the suspended state, that TS4ᵢ≤T and there is a V2X communication key in the active state.

In a possible implementation, the processing unit 2102 is further configured to switch the i^{th} key to the active state if there is no V2X communication key in the active state when the i^{th} key is in the invalid state.

In a possible implementation, the first V2X communication key is a key in the active state.

In a possible implementation, when there is no key in the active state in the one or more keys, the first V2X communication key is a key in the suspended state or the invalid state.

In a possible implementation, the time information corresponding to the i^{th} key includes TS2ᵢ and TS4ᵢ, and further includes TS1ᵢ and/or TS3ᵢ; the time information corresponding to the i^{th} key includes one or more of TS1ᵢ, TS2ᵢ, and TS4ᵢ, and further includes T1ᵢ and T2ᵢ; the time information corresponding to the i^{th} key includes one or more of TS2ᵢ, TS3ᵢ, and TS4ᵢ, and further includes T2ᵢ and T3ᵢ; the time information corresponding to the i^{th} key includes one or more of TS1ᵢ, TS2ᵢ, TS3ᵢ, and TS4ᵢ, and further includes T1ᵢ, T2ᵢ, and T3ᵢ; the time information corresponding to the i^{th} key includes one or more of TS1ᵢ, TS2ᵢ, and TS4ᵢ, and T1ᵢ and T2ᵢ are preset; the time information corresponding to the i^{th} key includes one or more of TS2ᵢ, TS3ᵢ, and TS4ᵢ, and T2ᵢ and T3ᵢ are preset; or the time information corresponding to the i^{th} key includes one or more of TS1ᵢ, TS2ᵢ, TS3ᵢ, and TS4ᵢ, and T1ᵢ, T2ᵢ, and T3ᵢ are preset; and T1ᵢ is to-be-activated state duration of the i^{th} key in the x V2X communication keys, T2ᵢ is active state duration of the i^{th} key, and T3ᵢ is suspended state duration of the i^{th} key.

In a possible implementation, the V2X message further includes an initialization vector used to encrypt the V2X data.

In a possible implementation, the V2X message includes a to-be-signed data field, the to-be-signed data field includes a message header information field, the message header information field includes a key version field and an initialization vector field, the key version number corresponding to the first V2X communication key is carried in the key version field, and the initialization vector is carried in the initialization vector field.

In a possible implementation, the communication unit 2101 is further configured to send a first update request to the server when a time interval between the local system time and an activation start moment of a first target key in the x V2X communication keys reaches first preset duration, where the first update request is used to request an (N+1)^{th} batch of key information, and the first target key is a key that first enters the active state in the x V2X communication keys; the communication unit 2101 is further configured to send a first update request to the server when a time interval between the local system time and a suspension moment of a last key in the x V2X communication keys is less than second preset duration; the communication unit 2101 is further configured to send a first update request to the server when a quantity of used keys in the x V2X communication keys is greater than a first threshold; or the communication unit 2101 is further configured to send a first update request to the server when a quantity of remaining to-be-used keys in the x V2X communication keys is less than a second threshold.

In a possible implementation, the communication unit 2101 is further configured to send a first update request to the server, where the first update request is used to request an (N+1)^{th} batch of key information, and the first update request carries a quantity of V2X communication keys that need to be applied for; and the communication unit 2101 is further configured to receive the (N+1)^{th} batch of key information from the server, where the (N+1)^{th} batch of key information includes p V2X communication keys and time information corresponding to each of the p V2X communication keys, and p is equal to the quantity of V2X communication keys.

FIG. 21 is a schematic diagram of a structure of a communication apparatus according to an embodiment of this application. The communication apparatus shown in FIG. 21 may be configured to perform some or all functions of the second terminal device in the method embodiment described in FIG. 18A and FIG. 18B or FIG. 20A and FIG. 20B. The apparatus may be a second terminal device, an apparatus in a second terminal device, or an apparatus that can be used together with a second terminal device. The communication apparatus may alternatively be a chip system. The communication apparatus shown in FIG. 21 may include a communication unit 2101 and a processing unit 2102.

The communication unit 2101 is configured to receive an M^{th} batch of key information sent by a server, where the M^{th} batch of key information includes y V2X communication keys, and a key version number and time information of each of the y V2X communication keys, M is an integer greater than or equal to 1, and y is an integer greater than 1. The communication unit 2101 is further configured to receive a V2X message sent by a first terminal device, where the V2X message includes a key version number of a first V2X communication key and encrypted V2X data encrypted by using the first V2X communication key. The processing unit 2102 is configured to obtain the first V2X communication key from the y V2X communication keys based on the key version number of the first V2X communication key. The processing unit 2102 is further configured to decrypt the encrypted V2X data by using the first V2X communication key.

In a possible implementation, the processing unit 2102 is further configured to: before decrypting the encrypted V2X data by using the first V2X communication key, determine, based on local system time and time information corresponding to the first V2X communication key, that the first V2X communication key is valid.

In a possible implementation, a status of each of the y V2X communication keys includes an active state and an invalid state, time information corresponding to a j^{th} key in the y V2X communication keys indicates TS2ⱼ and TS4ⱼ, TS2ⱼ is an active state start moment of the j^{th} key, and TS4ⱼ is an invalid state start moment of the j^{th} key, where j is greater than 0 and less than or equal to y.

In a possible implementation, the status of each of the y V2X communication keys further includes a to-be-activated state and/or a suspended state, the time information corresponding to the j^{th} key further indicates TS1ⱼ and/or TS3ⱼ, TS1ⱼ is a to-be-activated state start moment of the j^{th} key, TS3ⱼ is a suspended state start moment of the j^{th} key, and in the y V2X communication keys, a suspended state start moment of a previous key is equal to an active state start moment of a current key.

In a possible implementation, a manner in which the processing unit 2102 determines, based on the local system time and the time information corresponding to the first V2X communication key, that the first V2X communication key is valid is specifically: determining, based on the local system time and the time information corresponding to the first V2X communication key, that a status of the first V2X communication key is the to-be-activated state, the active state, or the suspended state.

In a possible implementation, a manner in which the processing unit 2102 determines the status of the first V2X communication key based on the local system time and the time information corresponding to the first V2X communication key is specifically: determining, if TS1≤T<TS2, that the first V2X communication key is in the to-be-activated state, where T is the local system time; switching the first V2X communication key to the active state if TS2≤T<TS3 when the first V2X communication key is in the to-be-activated state; or switching the first V2X communication key to the suspended state if TS3≤T<TS4 when the first V2X communication key is in the active state, where TS1 is a to-be-activated state start moment of the first V2X communication key, TS2 is an active state start moment of the first V2X communication key, TS3 is a suspended state start moment of the first V2X communication key, and TS4 is an invalid state start moment of the first V2X communication key.

In a possible implementation, the processing unit 2102 is further configured to switch the first V2X communication key to the active state if there is no V2X communication key in the active state in the communication apparatus when the first V2X communication key is in the to-be-activated state.

In a possible implementation, a manner in which the processing unit 2102 switches the first V2X communication key to the suspended state if TS3≤T<TS4 when the first V2X communication key is in the active state is specifically: switching the first V2X communication key to the suspended state if TS3≤T<TS4 and there is a V2X communication key in the to-be-activated state in the communication apparatus when the first V2X communication key is in the active state.

In a possible implementation, the processing unit 2102 is further configured to switch the first V2X communication key to the active state if there is no V2X communication key in the active state when the first V2X communication key is in the suspended state.

In a possible implementation, the processing unit 2102 is further configured to switch the first V2X communication key to the active state if there is no V2X communication key in the active state when the first V2X communication key is in the invalid state.

In a possible implementation, the time information corresponding to the j^{th} key includes TS2ⱼ and TS4ⱼ, and further includes TS1ⱼ and/or TS3ⱼ; the time information corresponding to the j^{th} key includes one or more of TS1ⱼ, TS2ⱼ, and TS4ⱼ, and further includes T1ⱼ and T2ⱼ; the time information corresponding to the j^{th} key includes one or more of TS2ⱼ, TS3ⱼ, and TS4ⱼ, and further includes T2ⱼ and T3ⱼ; the time information corresponding to the j^{th} key includes one or more of TS1ⱼ, TS2ⱼ, TS3ⱼ, and TS4ⱼ, and further includes T1ⱼ, T2ⱼ, and T3ⱼ; the time information corresponding to the j^{th} key includes one or more of TS1ⱼ, TS2ⱼ, and TS4ⱼ, and T1ⱼ and T2ⱼ are preset; the time information corresponding to the j^{th} key includes one or more of TS2ⱼ, TS3ⱼ, and TS4ⱼ, and T2ⱼ and T3ⱼ are preset; or the time information corresponding to the j^{th} key includes one or more of TS1ⱼ, TS2ⱼ, TS3ⱼ, and TS4ⱼ, and T1ⱼ, T2ⱼ, and T3ⱼ are preset; and T1ⱼ is to-be-activated state duration of the j^{th} key in the y V2X communication keys, T2ⱼ is active state duration of the j^{th} key, and T3ⱼ is suspended state duration of the j^{th} key.

In a possible implementation, the V2X message further includes an initialization vector used to encrypt the V2X data.

In a possible implementation, the V2X message includes a to-be-signed data field, the to-be-signed data field includes a message header information field, the message header information field includes a key version field and an initialization vector field, the key version number corresponding to the first V2X communication key is carried in the key version field, and the initialization vector is carried in the initialization vector field.

In a possible implementation, the communication unit 2101 is further configured to send a second update request to the server when a time interval between the local system time and an activation start moment of a second target key in the y V2X communication keys reaches first preset duration, where the second update request is used to request to obtain an (X+1)^{th} batch of key information, and the second target key is a key that first enters the active state in the y V2X communication keys; the communication unit 2101 is further configured to send a second update request to the server when a time interval between the local system time and a suspension moment of a last key version in the y V2X communication keys is less than second preset duration; the communication unit 2101 is further configured to send a second update request to the server when a quantity of used keys in the y V2X communication keys is greater than a first threshold; or the communication unit 2101 is further configured to send a second update request to the server when a quantity of remaining to-be-used keys in the y V2X communication keys is less than a second threshold.

In a possible implementation, the communication unit 2101 is further configured to send a second update request to the server, where the second update request is used to request an (M+1)^{th} batch of key information, and the second update request carries a quantity of V2X communication keys that need to be applied for; and the communication unit 2101 is further configured to receive the (M+1)^{th} batch of key information from the server, where the (M+1)^{th} batch of key information includes q V2X communication keys, and a key version and time information corresponding to each of the q V2X communication keys, and q is equal to the quantity of V2X communication keys.

FIG. 21 is a schematic diagram of a structure of a communication apparatus according to an embodiment of this application. The communication apparatus shown in FIG. 21 may be configured to perform some or all functions of the server in the method embodiment described in FIG. 2, FIG. 18A and FIG. 18B, or FIG. 20A and FIG. 20B. The apparatus may be a server, an apparatus in a server, or an apparatus that can be used together with a server. The communication apparatus may alternatively be a chip system. The communication apparatus shown in FIG. 21 may include a communication unit 2101 and a processing unit 2102.

The processing unit 2102 is configured to generate an N^{th} batch of key information for a first terminal device, where the N^{th} batch of key information includes x V2X communication keys and time information corresponding to each of the x V2X communication keys, N is an integer greater than or equal to 1, and x is an integer greater than 1. The communication unit 2101 is configured to send the N^{th} batch of key information to the first terminal device. The server generates an M^{th} batch of key information for a second terminal device, where the M^{th} batch of key information includes y V2X communication keys, and a key version number and time information of each of the y V2X communication keys, M is an integer greater than or equal to 1, and y is an integer greater than 1. The server sends the M^{th} batch of key information to the second terminal device.

In a possible implementation, the communication unit 2101 is further configured to receive a first update request sent by the first terminal device, where the first update request is used to request an (N+1)^{th} batch of key information, and the first update request carries a quantity of V2X communication keys that need to be applied for; and the processing unit 2102 is further configured to generate the (N+1)^{th} batch of key information for the first terminal device based on the quantity of V2X communication keys carried in the first update request, where the (N+1)^{th} batch of key information includes p V2X communication keys and time information corresponding to each of the p V2X communication keys, and p is equal to the quantity of V2X communication keys. Optionally, the (N+1)^{th} batch of key information further includes a key version number corresponding to each of the p V2X communication keys. The communication unit 2101 is further configured to send the (N+1)^{th} batch of key information to the first terminal device.

In a possible implementation, the communication unit 2101 is further configured to receive a second update request sent by the second terminal device, where the second update request is used to request an (M+1)^{th} batch of key information, and the second update request carries a quantity of V2X communication keys that need to be applied for; and the processing unit 2102 is further configured to generate the (M+1)^{th} batch of key information for the second terminal device based on the quantity of V2X communication keys carried in the second update request, where the (M+1)^{th} batch of key information includes q V2X communication keys, and a key version and time information corresponding to each of the q V2X communication keys, and q is equal to the quantity of V2X communication keys. The communication unit 2101 is further configured to send the (M+1)^{th} batch of key information to the second terminal device.

FIG. 22 is a schematic diagram of a structure of a communication apparatus. The communication apparatus 2200 may be the first terminal device in the foregoing method embodiments, the second terminal device or the server in the foregoing method embodiments, a chip, a chip system, a processor, or the like that supports the first terminal device in implementing the foregoing method, a chip, a chip system, a processor, or the like that supports the second terminal device in implementing the foregoing method, or a chip, a chip system, a processor, or the like that supports the server in implementing the foregoing method. The communication apparatus may be configured to implement the method described in the foregoing method embodiments. For details, refer to the descriptions in the foregoing method embodiments.

The communication apparatus 2200 may include one or more processors 2201. The processor 2201 may be a general-purpose processor, a dedicated processor, or the like. For example, the processor 2201 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 2200 may include one or more memories 2202. The one or more memories 2202 may store instructions 2204. The instructions may be run on the processor 2201, to enable the communication apparatus 2200 to perform the method described in the foregoing method embodiments. Optionally, the memory 2202 may further store data. The processor 2201 and the memory 2202 may be separately disposed, or may be integrated together.

Optionally, the communication apparatus 2200 may further include a transceiver 2205 and an antenna 2206. The transceiver 2205 may be referred to as a transceiver unit, a transceiver machine, a transceiver circuit, or the like, and is configured to implement a sending/receiving function. The transceiver 2205 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

When the communication apparatus 2200 is the first terminal device, the processor 2201 is configured to perform a data processing operation performed by the first terminal device in the foregoing method embodiments; and the transceiver 2205 is configured to perform a data sending/receiving operation performed by the first terminal device in the foregoing method embodiments. For example, the processor 2201 is configured to perform 203 and 204 in FIG. 2; and the transceiver 2205 is configured to perform a receiving operation performed by the first terminal device in FIG. 2. Alternatively, the processor 2201 is configured to perform 1805 and 1806 in FIG. 18A and FIG. 18B; and the transceiver 2205 is configured to perform a sending/receiving operation performed by the first terminal device in FIG. 18A and FIG. 18B. Alternatively, the processor 2201 is configured to perform 2005 and 2006 in FIG. 20A and FIG. 20B; and the transceiver 2205 is configured to perform a sending/receiving operation performed by the first terminal device in FIG. 20A and FIG. 20B.

When the communication apparatus 2200 is the second terminal device, the processor 2201 is configured to perform a data processing operation performed by the second terminal device in the foregoing method embodiments; and the transceiver 2205 is configured to perform a data sending/receiving operation performed by the second terminal device in the foregoing method embodiments. For example, the processor 2201 is configured to perform 1808 and 1809 in FIG. 18A and FIG. 18B; and the transceiver 2205 is configured to perform a receiving operation performed by the second terminal device in FIG. 18A and FIG. 18B. Alternatively, the processor 2201 is configured to perform 2008 and 2009 in FIG. 20A and FIG. 20B; and the transceiver 2205 is configured to perform a sending/receiving operation performed by the second terminal device in FIG. 20A and FIG. 20B.

When the communication apparatus 2200 is the server, the processor 2201 is configured to perform a data processing operation performed by the server in the foregoing method embodiments; and the transceiver 2205 is configured to perform a data sending/receiving operation performed by the server in the foregoing method embodiments. For example, the processor 2201 is configured to perform 201 in FIG. 2; and the transceiver 2205 is configured to perform a sending operation performed by the server in FIG. 2. Alternatively, the processor 2201 is configured to perform 1801 and 1803 in FIG. 18A and FIG. 18B; and the transceiver 2205 is configured to perform a sending operation performed by the server in FIG. 18A and FIG. 18B. Alternatively, the processor 2201 is configured to perform 2001 and 2003 in FIG. 20A and FIG. 20B; and the transceiver 2205 is configured to perform a sending/receiving operation performed by the server in FIG. 20A and FIG. 20B.

In another possible design, the processor 2201 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code or data. Alternatively, the transceiver circuit, the interface, or the interface circuit may be configured to transmit or transfer a signal.

In still another possible design, optionally, the processor 2201 may store instructions 2203. When the instructions 2203 are run on the processor 2201, the communication apparatus 2200 may be enabled to perform the method described in the foregoing method embodiments. The instructions 2203 may be embedded in the processor 2201. In this case, the processor 2201 may be implemented by hardware.

In still another possible design, the communication apparatus 2200 may include a circuit. The circuit may implement a sending, receiving, or communication function in the foregoing method embodiments. The processor and the transceiver described in this embodiment of this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-channel metal oxide semiconductor (nMetal oxide semiconductor, NMOS), a P-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiment may be the first terminal device, the second terminal device, or the server. However, a scope of the communication apparatus described in embodiments of this application is not limited thereto, and a structure of the communication apparatus may not be limited by FIG. 22. The communication apparatus may be an independent device or may be a part of a large device. For example, the communication apparatus may be:
(1) an independent integrated circuit IC, a chip, or a chip system or subsystem;
(2) a set of one or more ICs, where optionally, the IC set may further include a storage component configured to store data and instructions;
(3) an ASIC, for example, a modem (MSM);
(4) a module that can be built into another device;
(5) a receiver machine, a terminal, an intelligent terminal, a cellular phone, a wireless device, a handheld device, a mobile unit, a vehicle-mounted device, a network device, a cloud device, an artificial intelligence device, or the like; or
(6) others.

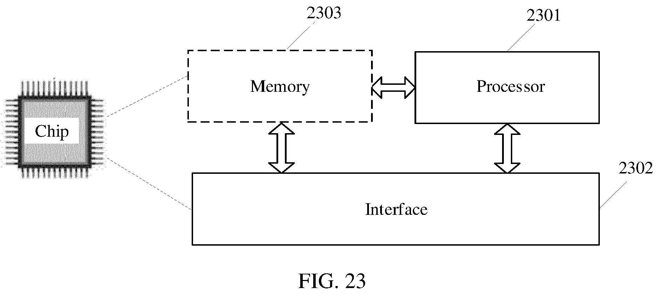

For a case in which the communication apparatus may be a chip or a chip system, refer to a schematic diagram of a structure of a chip shown in FIG. 23. The chip 2300 shown in FIG. 23 includes a processor 2301 and an interface 2302. Optionally, the chip may further include a memory 2303. There may be one or more processors 2301, and there may be a plurality of interfaces 2302.

In a design, when the chip is configured to implement a function of the first terminal device in embodiments of this application,
the interface 2302 is configured to receive or output a signal; and
the processor 2301 is configured to perform a data processing operation performed by the first terminal device in the foregoing method embodiments. For example, the processor 2301 is configured to perform 203 and 204 in FIG. 2; and the interface 2302 is configured to perform a receiving operation performed by the first terminal device in FIG. 2. Alternatively, the processor 2301 is configured to perform 1805 and 1806 in FIG. 18A and FIG. 18B; and the interface 2302 is configured to: perform a signal receiving operation performed by the first terminal device in FIG. 18A and FIG. 18B, and output a V2X message. Alternatively, the processor 2301 is configured to perform 2005 and 2006 in FIG. 20A and FIG. 20B; and the interface 2302 is configured to: perform a signal receiving operation performed by the first terminal device in FIG. 20A and FIG. 20B, and output a V2X message and a first update request.

In another design, when the chip is configured to implement a function of the second terminal device in embodiments of this application,
the interface 2302 is configured to receive or output a signal; and
the processor 2301 is configured to perform a data processing operation performed by the second terminal device in the foregoing method embodiments. For example, the processor 2301 is configured to perform 1808 and 1809 in FIG. 18A and FIG. 18B; and the interface 2302 is configured to perform a receiving operation performed by the second terminal device in FIG. 18A and FIG. 18B. Alternatively, the processor 2301 is configured to perform 2008 and 2009 in FIG. 20A and FIG. 20B; and the interface 2302 is configured to: perform a receiving operation performed by the second terminal device in FIG. 20A and FIG. 20B, and output a second update request.

In still another design, when the chip is configured to implement a function of the server in embodiments of this application,
the interface 2302 is configured to receive or output a signal; and
the processor 2301 is configured to perform a data processing operation performed by the server in the foregoing method embodiments. For example, the processor 2301 is configured to perform 201 in FIG. 2; and the interface 2302 is configured to output an N^{th} batch of key information. Alternatively, the processor 2301 is configured to perform 1801 and 1803 in FIG. 18A and FIG. 18B; and the interface 2302 is configured to output an N^{th} batch of key information and an M^{th} batch of key information. Alternatively, the processor 2301 is configured to perform 2001 and 2003 in FIG. 20A and FIG. 20B; and the interface 2302 is configured to: perform a receiving operation performed by the server in FIG. 20A and FIG. 20B, and output an N^{th} batch of key information and an M^{th} batch of key information.

It may be understood that in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with another feature based on a requirement. Correspondingly, the communication apparatus provided in embodiments of this application may correspondingly implement these features or functions. Details are not described herein.

It should be understood that the processor in embodiments of this application may be an integrated circuit chip, and has a signal processing capability. In an implementation process, the steps in the foregoing method embodiments may be implemented by using an integrated logic circuit of hardware in the processor, or instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Based on descriptions used as an example instead of a limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these memories and any memory of another proper type.

This application further provides a computer-readable medium, configured to store computer software instructions. When the instructions are executed by a communication apparatus, the function in any one of the foregoing method embodiments is implemented.

This application further provides a computer program product, configured to store computer software instructions. When the instructions are executed by a communication apparatus, the function in any one of the foregoing method embodiments is implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, into which one or more usable media are integrated. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for updating a vehicle-to-everything V2X communication key, wherein the method comprises:
receiving (202; 1802; 2002), by a first terminal device, an N^{th} batch of key information sent by a server, wherein the N^{th} batch of key information comprises x V2X communication keys and time information corresponding to each of the x V2X communication keys, N is an integer greater than or equal to 1, and x is an integer greater than 1;
selecting (203; 1805; 2005), by the first terminal device, a first V2X communication key from the x V2X communication keys based on local system time and the time information corresponding to each key; and
encrypting (204; 1806; 2006), by the first terminal device, V2X data by using the first V2X communication key, to obtain encrypted V2X data;
wherein a status of each of the x V2X communication keys comprises an active state and an invalid state, time information corresponding to an i^{th} key in the x V2X communication keys indicates TS2ᵢ and TS4ᵢ, TS2ᵢ is an active state start moment of the i^{th} key, and TS4ᵢ is an invalid state start moment of the i^{th} key, wherein i is greater than 0 and less than or equal to x.

2. The method according to claim 1, wherein the N^{th} batch of key information further comprises a key version number corresponding to each of the x V2X communication keys, and the method further comprises:
sending (1807; 2007), by the first terminal device, a V2X message to a second terminal device, wherein the V2X message comprises a key version number corresponding to the first V2X communication key and the encrypted V2X data.

3. The method according to claim 1, wherein the status of each of the x V2X communication keys further comprises a to-be-activated state and/or a suspended state, the time information corresponding to the i^{th} key further indicates TS1ᵢ and/or TS3ᵢ, TS1ᵢ is a to-be-activated state start moment of the i^{th} key, TS3ᵢ is a suspended state start moment of the i^{th} key, and in the x V2X communication keys, a suspended state start moment of a previous key is equal to an active state start moment of a current key.

4. The method according to claim 3, wherein the selecting, by the first terminal device, a first V2X communication key from the x V2X communication keys based on local system time and the time information corresponding to each key comprises:
determining, by the first terminal device, a status of one or more of the x V2X communication keys based on the local system time and the time information corresponding to each key; and
selecting, by the first terminal device, the first V2X communication key from the one or more keys based on the status of the one or more keys.

5. The method according to claim 4, wherein the determining, by the first terminal device, a status of one or more of the x V2X communication keys based on the local system time and the time information corresponding to each key comprises:
determining, by the first terminal device if it is detected that TS1ᵢ<T<TS2ᵢ, that the i^{th} key is in the to-be-activated state, wherein T is the local system time;
switching, by the first terminal device, the i^{th} key to the active state if it is detected, when the i^{th} key is in the to-be-activated state, that TS2ᵢ≤T<TS3ᵢ;
switching, by the first terminal device, the i^{th} key to the suspended state if it is detected, when the i^{th} key is in the active state, that TS3ᵢ≤T<TS4ᵢ; or
switching, by the first terminal device, the i^{th} key to the invalid state if it is detected, when the i^{th} key is in the suspended state, that TS4ᵢ≤T.

6. The method according to any one of claims 1 to 5, wherein the first V2X communication key is a key in the active state.

7. The method according to claim 3, wherein
the time information corresponding to the i^{th} key comprises TS2ᵢ and TS4ᵢ, and further comprises TS1ᵢ and/or TS3ᵢ;
the time information corresponding to the i^{th} key comprises one or more of TS1ᵢ, TS2ᵢ, and TS4ᵢ, and further comprises T1ᵢ and T2ᵢ;
the time information corresponding to the i^{th} key comprises one or more of TS2ᵢ, TS3ᵢ, and TS4ᵢ, and further comprises T2ᵢ and T3ᵢ;
the time information corresponding to the i^{th} key comprises one or more of TS1ᵢ, TS2ᵢ, TS3ᵢ, and TS4ᵢ, and further comprises T1ᵢ, T2ᵢ, and T3ᵢ;
the time information corresponding to the i^{th} key comprises one or more of TS1ᵢ, TS2ᵢ, and TS4ᵢ, and T1ᵢ and T2ᵢ are preset;
the time information corresponding to the i^{th} key comprises one or more of TS2ᵢ, TS3ᵢ, and TS4ᵢ, and T2ᵢ and T3ᵢ are preset; or
the time information corresponding to the i^{th} key comprises one or more of TS1ᵢ, TS2ᵢ, TS3ᵢ, and TS4ᵢ, and T1ᵢ, T2ᵢ, and T3ᵢ are preset; and
T1ᵢ is to-be-activated state duration of the i^{th} key in the x V2X communication keys, T2ᵢ is active state duration of the i^{th} key, and T3ᵢ is suspended state duration of the i^{th} key.

8. The method according to any one of claims 1 to 7, wherein the V2X message further comprises an initialization vector used to encrypt the V2X data.

9. The method according to claim 8, wherein the V2X message comprises a to-be-signed data field, the to-be-signed data field comprises a message header information field, the message header information field comprises a key version field and an initialization vector field, the key version number corresponding to the first V2X communication key is carried in the key version field, and the initialization vector is carried in the initialization vector field.

10. The method according to claim 3, wherein the method further comprises:
sending (2010) a first update request to the server when a time interval between the local system time and an activation start moment of a first target key in the x V2X communication keys reaches first preset duration, wherein the first update request is used to request an (N+1)^{th} batch of key information, and the first target key is a key that first enters the active state in the x V2X communication keys;
sending (2010) a first update request to the server when a time interval between the local system time and a suspension moment of a last key in the x V2X communication keys is less than second preset duration;
sending ('2010) a first update request to the server when a quantity of used keys in the x V2X communication keys is greater than a first threshold; or
sending (2010) a first update request to the server when a quantity of remaining to-be-used keys in the x V2X communication keys is less than a second threshold.

11. A method for updating a vehicle-to-everything V2X key, wherein the method comprises:
receiving (1804; 2004), by a second terminal device, an M^{th} batch of key information sent by a server, wherein the M^{th} batch of key information comprises y V2X communication keys, and a key version number and time information of each of the y V2X communication keys, M is an integer greater than or equal to 1, and y is an integer greater than 1;
receiving (1807; 2007), by the second terminal device, a V2X message sent by a first terminal device, wherein the V2X message comprises a key version number of a first V2X communication key and encrypted V2X data encrypted by using the first V2X communication key;
obtaining (1808; 2008), by the second terminal device, the first V2X communication key from the y V2X communication keys based on the key version number of the first V2X communication key; and
decrypting (1809; 2009), by the second terminal device, the encrypted V2X data by using the first V2X communication key;
wherein a status of each of the y V2X communication keys comprises an active state and an invalid state, time information corresponding to a j^{th} key in the y V2X communication keys indicates TS2ⱼ and TS4ⱼ, TS2ⱼ is an active state start moment of the j^{th} key, and TS4ⱼ is an invalid state start moment of the j^{th} key, wherein j is greater than 0 and less than or equal to y.

12. The method according to claim 11, wherein before the decrypting (1809; 2009), by the second terminal device, the encrypted V2X data by using the first V2X communication key, the method further comprises:
determining, by the second terminal device based on local system time and time information corresponding to the first V2X communication key, that the first V2X communication key is valid.

13. A communication apparatus (2200), wherein the apparatus is configured to perform the method according to any one of claims 1 to 10, or comprising a unit (2101, 2102) configured to perform the method according to claim 11 or 12.

14. A computer-readable storage medium, wherein the computer-readable storage medium stores computer-executable instructions, and when the computer-executable instructions are invoked by a computer, the computer is enabled to perform the method according to any one of claims 1 to 10, or when the computer-executable instructions are invoked by a computer, the computer is enabled to perform the method according to claim 11 or 12.

## Patentansprüche

1. Verfahren zum Aktualisieren eines Vehicle-to-Everything-Kommunikationsschlüssels, V2X-Kommunikationsschlüssels, wobei das Verfahren Folgendes umfasst:
Empfangen (202; 1802; 2002), durch ein erstes Endgerät, eines N-ten Stapels von Schlüsselinformationen, die durch einen Server gesendet werden, wobei der N-te Stapel von Schlüsselinformationen x V2X-Kommunikationsschlüssel und Zeitinformationen umfasst, die jedem der x V2X-Kommunikationsschlüssel entsprechen, wobei N eine Ganzzahl größer oder gleich 1 ist und x eine Ganzzahl größer als 1 ist;
Auswählen (203; 1805; 2005), durch das erste Endgerät, eines ersten V2X-Kommunikationsschlüssels aus den x V2X-Kommunikationsschlüsseln basierend auf einer lokalen Systemzeit und den Zeitinformationen, die jedem Schlüssel entsprechen; und
Verschlüsseln (204; 1806; 2006), durch das erste Endgerät, von V2X-Daten unter Verwendung des ersten V2X-Kommunikationsschlüssels, um verschlüsselte V2X-Daten zu erlangen;
wobei ein Status eines jeden der x V2X-Kommunikationsschlüssel einen aktiven Zustand und einen ungültigen Zustand umfasst, Zeitinformationen, die einem i-ten Schlüssel in den x V2X-Kommunikationsschlüsseln entsprechen, TS2ᵢ und TS4ᵢ anzeigen, TS2ᵢ ein Startzeitpunkt für den aktiven Zustand des i-ten Schlüssels ist und TS4ᵢ ein Startzeitpunkt für den ungültigen Zustand des i-ten Schlüssels ist, wobei i größer als 0 und kleiner als oder gleich x ist.

2. Verfahren nach Anspruch 1, wobei der N-te Stapel von Schlüsselinformationen ferner eine Schlüsselversionsnummer umfasst, die jedem der x V2X-Kommunikationsschlüssel entspricht, und das Verfahren ferner Folgendes umfasst:
Senden (1807; 2007), durch das erste Endgerät, einer V2X-Nachricht an ein zweites Endgerät, wobei die V2X-Nachricht eine Schlüsselversionsnummer umfasst, die dem ersten V2X-Kommunikationsschlüssel und den verschlüsselten V2X-Daten entspricht.

3. Verfahren nach Anspruch 1, wobei der Status eines jeden der x V2X-Kommunikationsschlüssel ferner einen zu aktivierenden Zustand und/oder einen ausgesetzten Zustand umfasst, die Zeitinformationen, die dem i-ten Schlüssel entsprechen, ferner TS1ᵢ und/oder TS3ᵢ angeben, TS1ᵢ ein Startzeitpunkt für den zu aktivierenden Zustand des i-ten Schlüssels ist, TS3ᵢ ein Startzeitpunkt für den ausgesetzten Zustand des i-ten Schlüssels ist und in den x V2X-Kommunikationsschlüsseln ein Startzeitpunkt für den ausgesetzten Zustand eines vorhergehenden Schlüssels gleich einem Startzeitpunkt für den aktiven Zustand eines aktuellen Schlüssels ist.

4. Verfahren nach Anspruch 3, wobei das Auswählen, durch das erste Endgerät, eines ersten V2X-Kommunikationsschlüssels aus den x V2X-Kommunikationsschlüsseln basierend auf einer lokalen Systemzeit und den Zeitinformationen, die jedem Schlüssel entsprechen, Folgendes umfasst:
Bestimmen, durch das erste Endgerät, eines Status von einem oder mehreren der x V2X-Kommunikationsschlüssel basierend auf der lokalen Systemzeit und den Zeitinformationen, die jedem Schlüssel entsprechen; und
Auswählen, durch das erste Endgerät, des ersten V2X-Kommunikationsschlüssels aus dem einen oder den mehreren Schlüsseln basierend auf dem Status des einen oder der mehreren Schlüssel.

5. Verfahren nach Anspruch 4, wobei das Bestimmen, durch das erste Endgerät, eines Status von einem oder mehreren der x V2X-Kommunikationsschlüssel basierend auf der lokalen Systemzeit und den Zeitinformationen, die jedem Schlüssel entsprechen, Folgendes umfasst:
Bestimmen, durch das erste Endgerät, wenn erkannt wird, dass TS1ᵢ≤T<TS2ᵢ, dass sich der i-te Schlüssel in dem zu aktivierenden Zustand befindet, wobei T die lokale Systemzeit ist;
Umschalten, durch das erste Endgerät, des i-ten Schlüssels in den aktiven Zustand, wenn erkannt wird, dass, wenn sich der i-te Schlüssel in dem zu aktivierenden Zustand befindet, TS2ᵢ≤T<TS3ᵢ;
Umschalten, durch das erste Endgerät, des i-ten Schlüssels in den ausgesetzten Zustand, wenn erkannt wird, dass, wenn sich der i-te Schlüssel in dem aktiven Zustand befindet, TS3ᵢ≤T<TS4ᵢ; oder
Umschalten, durch das erste Endgerät, des i-ten Schlüssels in den ungültigen Zustand, wenn erkannt wird, dass, wenn sich der i-te Schlüssel in dem ausgesetzten Zustand befindet, TS4ᵢ≤T.

6. Verfahren nach einem der Ansprüche 1 bis 5, wobei der erste V2X-Kommunikationsschlüssel ein Schlüssel in dem aktiven Zustand ist.

7. Verfahren nach Anspruch 3, wobei
die Zeitinformationen, die dem i-ten Schlüssel entsprechen, TS2ᵢ und TS4ᵢ umfassen und ferner TS1ᵢ und/oder TS3ᵢ umfassen;
die Zeitinformationen, die dem i-ten Schlüssel entsprechen, einen oder mehrere aus TS1ᵢ, TS2ᵢ und TS4ᵢ umfassen und ferner T1ᵢ und T2ᵢ umfassen;
die Zeitinformationen, die dem i-ten Schlüssel entsprechen, einen oder mehrere aus TS2ᵢ, TS3ᵢ und TS4ᵢ umfassen und ferner T2ᵢ und T3ᵢ umfassen;
die Zeitinformationen, die dem i-ten Schlüssel entsprechen, einen oder mehrere aus TS1ᵢ, TS2ᵢ, TS3ᵢ und TS4ᵢ umfassen und ferner T1ᵢ, T2ᵢ und T3ᵢ umfassen;
die Zeitinformationen, die dem i-ten Schlüssel entsprechen, einen oder mehrere aus TS1ᵢ, TS2ᵢ und TS4ᵢ umfassen und T1ᵢ und T2ᵢ voreingestellt sind;
die Zeitinformationen, die dem i-ten Schlüssel entsprechen, einen oder mehrere aus TS2ᵢ, TS3ᵢ und TS4ᵢ umfassen und T2ᵢ und T3ᵢ voreingestellt sind; oder
die Zeitinformationen, die dem i-ten Schlüssel entsprechen, einen oder mehrere aus TS1ᵢ, TS2ᵢ, TS3ᵢ und TS4ᵢ umfassen und T1ᵢ, T2ᵢ und T3ᵢ voreingestellt sind; und
T1ᵢ eine Dauer des zu aktivierenden Zustands des i-ten Schlüssels in den x V2X-Kommunikationsschlüsseln ist, T2ᵢ eine Dauer des aktiven Zustands des i-ten Schlüssels ist und T3ᵢ eine Dauer des ausgesetzten Zustands des i-ten Schlüssels ist.

8. Verfahren nach einem der Ansprüche 1 bis 7, wobei die V2X-Nachricht ferner einen Initialisierungsvektor umfasst, der dazu verwendet wird, die V2X-Daten zu verschlüsseln.

9. Verfahren nach Anspruch 8, wobei die V2X-Nachricht ein zu signierendes Datenfeld umfasst, das zu signierende Datenfeld ein Nachrichtenkopf-Informationsfeld umfasst, das Nachrichtenkopf-Informationsfeld ein Schlüsselversionsfeld und ein Initialisierungsvektorfeld umfasst, die Schlüsselversionsnummer, die dem ersten V2X-Kommunikationsschlüssel entspricht, in dem Schlüsselversionsfeld enthalten ist und der Initialisierungsvektor in dem Initialisierungsvektorfeld enthalten ist.

10. Verfahren nach Anspruch 3, wobei das Verfahren ferner Folgendes umfasst:
Senden (2010) einer ersten Aktualisierungsanforderung an den Server, wenn ein Zeitintervall zwischen der lokalen Systemzeit und einem Aktivierungsstartzeitpunkt eines ersten Zielschlüssels in den x V2X-Kommunikationsschlüsseln eine erste voreingestellte Dauer erreicht, wobei die erste Aktualisierungsanforderung dazu verwendet wird, einen (N+1)-ten Stapel von Schlüsselinformationen anzufordern, und der erste Zielschlüssel ein Schlüssel ist, der zuerst in den aktiven Zustand in den x V2X-Kommunikationsschlüsseln eintritt;
Senden (2010) einer ersten Aktualisierungsanforderung an den Server, wenn ein Zeitintervall zwischen der lokalen Systemzeit und einem Aussetzungszeitpunkt eines letzten Schlüssels in den x V2X-Kommunikationsschlüsseln kleiner ist als eine zweite voreingestellte Dauer;
Senden ('2010) einer ersten Aktualisierungsanforderung an den Server, wenn eine Anzahl von verwendeten Schlüsseln in den x V2X-Kommunikationsschlüsseln größer ist als ein erster Schwellenwert; oder
Senden (2010) einer ersten Aktualisierungsanforderung an den Server, wenn eine Anzahl von verbleibenden zu verwendenden Schlüsseln in den x V2X-Kommunikationsschlüsseln kleiner ist als ein zweiter Schwellenwert.

11. Verfahren zum Aktualisieren eines Vehicle-to-Everything-Schlüssels, V2X-Schlüssels, wobei das Verfahren Folgendes umfasst:
Empfangen (1804; 2004), durch ein zweites Endgerät, eines M-ten Stapels von Schlüsselinformationen, die durch einen Server gesendet werden, wobei der M-te Stapel von Schlüsselinformationen y V2X-Kommunikationsschlüssel und eine Schlüsselversionsnummer und eine Zeitinformation eines jeden der y V2X-Kommunikationsschlüssel umfasst, M eine Ganzzahl größer als oder gleich 1 ist und y eine Ganzzahl größer als 1 ist;
Empfangen (1807; 2007), durch das zweite Endgerät, einer V2X-Nachricht, die durch ein erstes Endgerät gesendet wird, wobei die V2X-Nachricht eine Schlüsselversionsnummer eines ersten V2X-Kommunikationsschlüssels und verschlüsselte V2X-Daten, die unter Verwendung des ersten V2X-Kommunikationsschlüssels verschlüsselt werden, umfasst;
Erlangen (1808; 2008), durch das zweite Endgerät, des ersten V2X-Kommunikationsschlüssels von den y V2X-Kommunikationsschlüsseln basierend auf der Schlüsselversionsnummer des ersten V2X-Kommunikationsschlüssels; und
Entschlüsseln (1809; 2009), durch das zweite Endgerät, der verschlüsselten V2X-Daten unter Verwendung des ersten V2X-Kommunikationsschlüssels;
wobei ein Status eines jeden der y V2X-Kommunikationsschlüssel einen aktiven Zustand und einen ungültigen Zustand umfasst, Zeitinformationen, die einem j-ten Schlüssel in den y V2X Kommunikationsschlüsseln entsprechen, TS2ⱼ und TS4ⱼ angeben, TS2ⱼ ein Startzeitpunkt für den aktiven Zustand des j-ten Schlüssels ist, und TS4ⱼ ein Startzeitpunkt für den ungültigen Zustand des j-ten Schlüssels ist, wobei j größer als 0 und kleiner als oder gleich y ist.

12. Verfahren nach Anspruch 11, wobei das Verfahren, vor dem Entschlüsseln (1809; 2009), durch das zweite Endgerät, der verschlüsselten V2X-Daten unter Verwendung des ersten V2X-Kommunikationsschlüssels, ferner Folgendes umfasst:
Bestimmen, durch das zweite Endgerät, basierend auf einer lokalen Systemzeit und Zeitinformationen, die dem ersten V2X-Kommunikationsschlüssel entsprechen, dass der erste V2X-Kommunikationsschlüssel gültig ist.

13. Kommunikationsvorrichtung (2200), wobei die Vorrichtung dazu konfiguriert ist, das Verfahren nach einem der Ansprüche 1 bis 10 durchzuführen, oder eine Einheit (2101, 2102) umfasst, die dazu konfiguriert ist, das Verfahren nach Anspruch 11 oder 12 durchzuführen.

14. Computerlesbares Speichermedium, wobei das computerlesbare Speichermedium computerausführbare Anweisungen speichert, und wenn die computerausführbaren Anweisungen durch einen Computer aufgerufen werden, der Computer in die Lage versetzt wird, das Verfahren nach einem der Ansprüche 1 bis 10 durchzuführen, oder wenn die computerausführbaren Anweisungen durch einen Computer aufgerufen werden, der Computer in die Lage versetzt wird, das Verfahren nach Anspruch 11 oder 12 durchzuführen.

## Revendications

1. Procédé de mise à jour d'une clé de communication de véhicule-à-tout, V2X, dans lequel le procédé comprend :
la réception (202 ; 1802 ; 2002), par un premier dispositif terminal, d'un N^{-ième} lot d'informations de clé envoyées par un serveur, dans lequel le N^{-ième} lot d'informations de clé comprend x clés de communication V2X et des informations temporelles correspondant à chacune des x clés de communication V2X, N est un entier supérieur ou égal à 1, et x est un entier supérieur à 1 ;
la sélection (203 ; 1805 ; 2005), par le premier dispositif terminal, d'une première clé de communication V2X parmi les x clés de communication V2X sur la base de l'heure du système local et des informations temporelles correspondant à chaque clé ; et
le chiffrement (204 ; 1806 ; 2006), par le premier dispositif terminal, de données V2X à l'aide de la première clé de communication V2X, pour obtenir des données V2X chiffrées ;
dans lequel un état de chacune des x clés de communication V2X comprend un état actif et un état invalide, des informations temporelles correspondant à une i^{-ième} clé dans les x clés de communication V2X indiquent TS2ᵢ et TS4ᵢ, TS2ᵢ est un instant de début d'état actif de la i^{-ième} clé, et TS4ᵢ est un instant de début d'état invalide de la i^{-ième} clé, dans lequel i est supérieur à 0 et inférieur ou égal à x.

2. Procédé selon la revendication 1, dans lequel le N^{-ième} lot d'informations de clé comprend également un numéro de version de clé correspondant à chacune des x clés de communication V2X, et le procédé comprend également :
l'envoi (1807 ; 2007), par le premier dispositif terminal, d'un message V2X à un second dispositif terminal, dans lequel le message V2X comprend un numéro de version de clé correspondant à la première clé de communication V2X et aux données V2X chiffrées.

3. Procédé selon la revendication 1, dans lequel l'état de chacune des x clés de communication V2X comprend également un état à activer et/ou un état suspendu, les informations temporelles correspondant à la i^{-ième} clé indiquent également TS1ᵢ et/ou TS3ᵢ, TS1ᵢ est un instant de début d'état à activer de la i^{-ième} clé, TS3ᵢ est un instant de début d'état suspendu de la i^{-ième} clé, et dans les x clés de communication V2X, un instant de début d'état suspendu d'une clé précédente est égal à un instant de début d'état actif d'une clé actuelle.

4. Procédé selon la revendication 3, dans lequel la sélection, par le premier dispositif terminal, d'une première clé de communication V2X parmi les x clés de communication V2X sur la base de l'heure du système local et des informations temporelles correspondant à chaque clé comprend :
la détermination, par le premier dispositif terminal, d'un état de l'une ou plusieurs des x clés de communication V2X sur la base de l'heure du système local et des informations temporelles correspondant à chaque clé ; et
la sélection, par le premier dispositif terminal, de la première clé de communication V2X parmi les une ou plusieurs clés sur la base de l'état des une ou plusieurs clés.

5. Procédé selon la revendication 4, dans lequel la détermination, par le premier dispositif terminal, d'un état de l'une ou plusieurs des x clés de communication V2X sur la base de l'heure du système local et des informations temporelles correspondant à chaque clé comprend :
la détermination, par le premier dispositif terminal s'il est détecté que TS1ᵢ≤T<TS2ᵢ, que la i^{-ième} clé est dans l'état à activer, dans lequel T est l'heure du système local ;
la commutation, par le premier dispositif terminal, de la i^{-ième} clé à l'état actif s'il est détecté, lorsque la i^{-ième} clé est dans l'état à activer, que TS2ᵢ≤T<TS3ᵢ ;
la commutation, par le premier dispositif terminal, de la i^{-ième} clé à l'état suspendu s'il est détecté, lorsque la i^{-ième} clé est dans l'état actif, que TS3ᵢ≤T<TS4ᵢ ; ou
la commutation, par le premier dispositif terminal, de la i^{-ième} clé à l'état invalide s'il est détecté, lorsque la i^{-ième} clé est dans l'état suspendu, que TS4ᵢ≤T.

6. Procédé selon l'une quelconque des revendications 1 à 5, dans lequel la première clé de communication V2X est une clé à l'état actif.

7. Procédé selon la revendication 3, dans lequel
les informations temporelles correspondant à la i^{-ième} clé comprennent TS2ᵢ et TS4ᵢ, et comprennent également TS1ᵢ et/ou TS3ᵢ ;
les informations temporelles correspondant à la i^{-ième} clé comprennent l'un ou plusieurs parmi : TS1ᵢ, TS2ᵢ et TS4ᵢ, et comprennent également T1ᵢ et T2ᵢ ;
les informations temporelles correspondant à la i^{-ième} clé comprennent l'un ou plusieurs parmi : TS2ᵢ, TS3ᵢ et TS4ᵢ, et comprennent également T2ᵢ et T3ᵢ ;
les informations temporelles correspondant à la i^{-ième} clé comprennent l'un ou plusieurs parmi : TS1ᵢ, TS2ᵢ, TS3ᵢ et TS4ᵢ, et comprennent également T1ᵢ, T2ᵢ, et T3ᵢ ;
les informations temporelles correspondant à la i^{-ième} clé comprennent l'un ou plusieurs parmi : TS1ᵢ, TS2ᵢ et TS4ᵢ, et T1ᵢ et T2ᵢ sont prédéfinis ;
les informations temporelles correspondant à la i^{-ième} clé comprennent l'un ou plusieurs parmi : TS2ᵢ, TS3ᵢ et TS4ᵢ, et T2ᵢ et T3ᵢ sont prédéfinis ; ou
les informations temporelles correspondant à la i^{-ième} clé comprennent l'un ou plusieurs parmi : TS1ᵢ, TS2ᵢ, TS3ᵢ et TS4ᵢ, et T1ᵢ, T2ᵢ et T3ᵢ sont prédéfinis ; et
T1ᵢ est la durée de l'état à activer de la i^{-ième} clé dans les x clés de communication V2X, T2ᵢ est la durée de l'état actif de la i^{-ième} clé, et T3ᵢ est la durée de l'état suspendu de la i^{-ième} clé.

8. Procédé selon l'une quelconque des revendications 1 à 7, dans lequel le message V2X comprend également un vecteur d'initialisation utilisé pour chiffrer les données V2X.

9. Procédé selon la revendication 8, dans lequel le message V2X comprend un champ de données à signer, le champ de données à signer comprend un champ d'informations d'en-tête de message, le champ d'informations d'en-tête de message comprend un champ de version de clé et un champ de vecteur d'initialisation, le numéro de version de clé correspondant à la première clé de communication V2X est transporté dans le champ de version de clé, et le vecteur d'initialisation est transporté dans le champ de vecteur d'initialisation.

10. Procédé selon la revendication 3, dans lequel le procédé comprend également :
l'envoi (2010) d'une première demande de mise à jour au serveur lorsqu'un intervalle de temps entre l'heure du système local et un instant de début d'activation d'une première clé cible dans les x clés de communication V2X atteint une première durée prédéfinie, dans lequel la première demande de mise à jour est utilisée pour demander un (N+1)^{-ième} lot d'informations de clé, et la première clé cible est une clé qui entre en premier dans l'état actif dans les x clés de communication V2X ;
l'envoi (2010) d'une première demande de mise à jour au serveur lorsqu'un intervalle de temps entre l'heure système locale et un instant de suspension d'une dernière clé dans les x clés de communication V2X est inférieur à une seconde durée prédéfinie ;
l'envoi ('2010) d'une première demande de mise à jour au serveur lorsqu'une quantité de clés utilisées dans les x clés de communication V2X est supérieure à un premier seuil ; ou
l'envoi (2010) d'une première demande de mise à jour au serveur lorsqu'une quantité de clés restant à utiliser dans les x clés de communication V2X est inférieure à un second seuil.

11. Procédé de mise à jour d'une clé de véhicule-à-tout, V2X, dans lequel le procédé comprend :
la réception (1804 ; 2004), par un second dispositif terminal, d'un M^{-ième} lot d'informations de clé envoyées par un serveur, dans lequel le M^{-ième} lot d'informations de clé comprend y clés de communication V2X, et un numéro de version de clé et des informations temporelles de chacune des y clés de communication V2X, M est un entier supérieur ou égal à 1, et y est un entier supérieur à 1 ;
la réception (1807 ; 2007), par le second dispositif terminal, d'un message V2X envoyé par un premier dispositif terminal, dans lequel le message V2X comprend un numéro de version de clé d'une première clé de communication V2X et des données V2X chiffrées à l'aide de la première clé de communication V2X ;
l'obtention (1808 ; 2008), par le second dispositif terminal, de la première clé de communication V2X à partir des y clés de communication V2X sur la base du numéro de version de clé de la première clé de communication V2X ; et
le déchiffrement (1809 ; 2009), par le second dispositif terminal, des données V2X chiffrées à l'aide de la première clé de communication V2X ;
dans lequel un état de chacune des y clés de communication V2X comprend un état actif et un état invalide, des informations temporelles correspondant à une j^{-ième} clé dans les y clés de communication V2X indiquent TS2ⱼ et TS4ⱼ, TS2ⱼ est un instant de début d'état actif de la j^{-ième} clé, et TS4ⱼ est un instant de début d'état invalide de la j-^{ième} clé, dans lequel j est supérieur à 0 et inférieur ou égal à y.

12. Procédé selon la revendication 11, dans lequel avant le déchiffrement (1809 ; 2009), par le second dispositif terminal, des données V2X chiffrées à l'aide de la première clé de communication V2X, le procédé comprend également :
la détermination, par le second dispositif terminal sur la base de l'heure du système local et des informations temporelles correspondant à la première clé de communication V2X, que la première clé de communication V2X est valide.

13. Appareil de communication (2200), dans lequel l'appareil est configuré pour réaliser le procédé selon l'une quelconque des revendications 1 à 10, ou comprenant une unité (2101, 2102) configurée pour réaliser le procédé selon la revendication 11 ou 12.

14. Support de stockage lisible par ordinateur, dans lequel le support de stockage lisible par ordinateur stocke des instructions exécutables par ordinateur, et lorsque les instructions exécutables par ordinateur sont invoquées par un ordinateur, l'ordinateur est activé pour réaliser le procédé selon l'une quelconque des revendications 1 à 10, ou lorsque les instructions exécutables par ordinateur sont invoquées par un ordinateur, l'ordinateur est activé pour réaliser le procédé selon la revendication 11 ou 12.
